# EUROPEAN PATENT APPLICATION

(11) **EP 4 213 061 A2**
(43) Date of publication of application: **19.07.2023**
(21) Application number: 22208941.9
(22) Date of filing: 22.11.2022
(51) Int. Cl.: G06F 30/17, G06F 30/12

(54) **THREE-DIMENSIONAL (3D) MODELING OF A THREADED FEATURE USING COMPUTER-AIDED DESIGN**

(30) Priority: 22.11.2021 US 202163281834 P
(71) Applicant: Dassault Systemes SolidWorks Corporation, Waltham, MA 02451-1223 (US)
(72) Inventor: Stiles, Jody, Waltham, 02451-1223 (US); Zhu, Heng, Waltham, 02451-1223 (US); Rothstein, Saul, Waltham, 02451-1223 (US); Ran, Ruijiang, Waltham, 02451-1223 (US); Ding, Xiaoqiang, Waltham, 02451-1223 (US)
(74) Representative: Bandpay & Greuter

(57) **Abstract**

A computer-based method is disclosed of creating a visual representation of a threaded feature on a three-dimensional (3D) modelled object in a computer-aided design environment. The method includes constructing a helical curve and start and end circles for a threaded feature in a 3D modelled object, trimming the helical curve to conform to a geometry of the modelled object, identifying a boundary of the trimmed helical curve; and displaying a cosmetic thread to visually represent the threaded feature based on the trimmed helical curve and the identified boundaries of the trimmed helical curve.

## Description

### CROSS-REFERENCE TO RELATED APPLICATION(S)

This application claims the benefit of priority to U.S. Provisional Patent Application No. 63,281,834, entitled THREE-DIMENSIONAL (3D) MODELING OF A THREADED FEATURE USING COMPUTERAIDED DESIGN, which was filed on November 22, 2021. The disclosure of the prior application is incorporated by reference herein in its entirety.

### FIELD OF THE INVENTION

This disclosure relates to the field of design and, more particularly, relates to three-dimensional (3D) modeling of a threaded feature using computer-aided design.

### BACKGROUND

Computer-aided design (CAD) software can facilitate the design of a great many objects, some of which have threaded features. Prior methods of representing threaded features, particularly with cosmetic threads, in a computer-aided design environment were rudimentary and failed to adequately inform viewers of the true nature of any such threaded features. Other shortcomings exist in representing threaded features in a computer-aided design environment as well.

### SUMMARY OF THE INVENTION

In one aspect, a computer-based method is disclosed of creating a visual representation of a threaded feature on a three-dimensional (3D) modelled object in a computer-aided design environment. The method includes constructing a helical curve and start and end circles for a threaded feature in a 3D modelled object, trimming the helical curve to conform to a geometry of the modelled object, identifying a boundary of the trimmed helical curve; and displaying a cosmetic thread to visually represent the threaded feature based on the trimmed helical curve and the identified boundaries of the trimmed helical curve.

In examples of the method, identifying the boundary of the trimmed helical curve comprises intersecting a cylindrical envelope of the helical curve with a neighboring face of a surface of the threaded feature.

In examples of the method, identifying the boundary of the trimmed helical curve further comprises designating an intersection between the cylindrical envelope and the neighboring face of the surface of the threaded feature as the boundary of the trimmed helical curve.

In examples, the method may further comprise, prior to constructing the helical curve and the start and end circles for the threaded feature establishing a thread definition for the threaded feature; and processing data from the thread definition to support creating the visual representation of the threaded feature.

In examples of the method, establishing the thread definition comprises receiving data from a computer-based user interface identifying a material type, a geometry type, a length option, and a direction type for the threaded feature; and receiving data from the computer-based user interface identifying a start edge on the modelled object for the threaded feature.

In examples of the method, the material type specifies whether the thread is to be formed by cutting material or adding material, the geometry type specifies whether the thread is to be a cosmetic thread or a physical thread, the length option specifies whether the length of the thread is to be blind or limited by a certain geometry, and the direction type specifies whether the thread is to left-handed or right-handed.

In examples, the method may further comprise calculating a length of the thread if the thread definition indicates that the length of the thread is limited by certain geometry.

In examples, the method may further comprise enlarging a geometry of the modelled object by thickening to produce an enlarged geometry of the modelled object if the thread definition indicates that the thread is to be formed by adding material.

In examples of the method, trimming the helical curve to conform to the geometry of the modelled object comprises trimming the helical curve to conform to the enlarged geometry of the modelled object if the thread definition indicates that the thread is to be formed by adding material.

In examples, the method may further comprise retrieving values of thread pitch and thread major diameter from data stored in computer-based memory; and calculating thread height and minor diameter based on the thread pitch and thread major diameter.

In another aspect, a computer-based system is disclosed for creating a visual representation of a threaded feature on a three-dimensional (3D) modelled object in a computeraided design environment. The computer-based system includes a computer processor and computer-based memory operatively coupled to the computer processor. The computer-based memory stores computer-readable instructions that, when executed by the computer processor, cause the computer-based system to construct a helical curve and start and end circles for a threaded feature in a 3D modelled object, trim the helical curve to conform to a geometry of the modelled object, identify a boundary of the trimmed helical curve; and display (on a computer display) a cosmetic thread to visually represent the threaded feature based on the trimmed helical curve and the identified boundaries of the trimmed helical curve.

In yet another aspect, a non-transitory computer readable medium is disclosed that has stored thereon computer-readable instructions that, when executed by a computer-based processor, cause the computer-based processor to: construct a helical curve and start and end circles for a threaded feature in a 3D modelled object, trim the helical curve to conform to a geometry of the modelled object, identify a boundary of the trimmed helical curve; and display a cosmetic thread to visually represent the threaded feature based on the trimmed helical curve and the identified boundaries of the trimmed helical curve.

According to another aspect, a computer-based method is disclosed of creating a visual representation of a threaded feature on a three-dimensional (3D) modelled object in a computeraided design environment. The method includes establishing a thread definition for the threaded feature, processing data from the thread definition to support creating the visual representation of the threaded feature; and constructing thread geometry based on the thread definition and the processing of data from the thread definition. Constructing the thread geometry may include determining, with a computer processor, whether the thread definition identifies the visual representation as a cosmetic thread or a physical thread. If the computer processor determines that the visual representation is a cosmetic thread then the method includes constructing a helical curve and start and end circles for the threaded feature, trimming the helical curve to conform to a geometry of the modelled object, identifying a boundary of the trimmed helical curve; and displaying, on a computer display, the cosmetic thread to visually represent the threaded feature based on the trimmed helical curve and the identified boundaries of the trimmed helical curve.

In examples of the method, if the computer processor determines that the visual representation is a physical thread then constructing a thread profile; constructing a sweeping spine containing a helical curve and start and end curves; sweeping the thread profile along the spine to create a thread tool body; and modifying a geometry of a portion of the modelled object based on the thread tool body; and merging the modified geometry with a previous geometry of the modelled object via a union operation.

In examples of the method, processing the data from the thread definition to support creating the visual representation of the threaded feature comprises determining a diameter of the threaded feature, a thread starting location, and thread direction; identifying an applicable standard or receiving user input to define one or more thread parameters including thread pitch and thread major diameter; calculating a thread height and thread minor diameter based on the one or more thread parameters; and calculating a thread length if the thread definition indicates that the thread length is limited by certain geometry.

In examples, the method further comprise storing a common data holding definition that is applicable whether the visual representation is a cosmetic thread or a physical thread.

In examples of the method, the common data holding definition stores data from the thread definition for the threaded feature, and results from the processing of the data from the thread definition for the threaded feature.

In examples, the method may further comprise presenting, on the computer display, with an image of the modelled object having the cosmetic thread or with an image of the modelled object having the physical thread, an interactive element, that, when interacted with, causes the computer to switch images.

In examples, the method may further comprise providing a single interface from which the user can choose to display a cosmetic thread or a physical thread resulting in a single feature in the model's history rather than two discreet features that need to be manually suppressed or unsuppressed.

In yet another aspect, a computer-based system is disclosed for creating a visual representation of a threaded feature on a three-dimensional (3D) modelled object in a computeraided design environment. The computer-based system includes a computer processor and computer-based memory operatively coupled to the computer processor. The computer-based memory stores computer-readable instructions that, when executed by the computer processor, cause the computer-based system to: establish a thread definition for the threaded feature, process data from the thread definition to support creating the visual representation of the threaded feature, and construct thread geometry based on the thread definition and the processing of data from the thread definition. Constructing the thread geometry may include determining, with a computer processor, whether the thread definition identifies the visual representation as a cosmetic thread or a physical thread. If the computer processor determines that the visual representation is a cosmetic thread then, the method includes constructing a helical curve and start and end circles for the threaded feature, trimming the helical curve to conform to a geometry of the modelled object, identifying a boundary of the trimmed helical curve, and displaying, on a computer display, the cosmetic thread to visually represent the threaded feature based on the trimmed helical curve and the identified boundaries of the trimmed helical curve.

In still another aspect, a non-transitory computer readable medium is disclosed having stored thereon computer-readable instructions that, when executed by a computer-based processor, cause the computer-based processor to create a visual representation of a threaded feature on a three-dimensional (3D) modelled object in a computer-aided design environment by performing a method that includes establishing a thread definition for the threaded feature, processing data from the thread definition to support creating the visual representation of the threaded feature, and constructing thread geometry based on the thread definition and the processing of data from the thread definition. Constructing the thread geometry may include determining, with a computer processor, whether the thread definition identifies the visual representation as a cosmetic thread or a physical thread. If the computer processor determines that the visual representation is a cosmetic thread then the method includes constructing a helical curve and start and end circles for the threaded feature, trimming the helical curve to conform to a geometry of the modelled object, identifying a boundary of the trimmed helical curve, and displaying, on a computer display, the cosmetic thread to visually represent the threaded feature based on the trimmed helical curve and the identified boundaries of the trimmed helical curve.

In some implementations, one or more of the following advantages are present.

For example, in various implementations, the systems and techniques disclosed provide a relatively simple, efficient way of informing viewers of the true nature of a threaded feature in an object within a computer-aided design environment. Moreover, in various implementations, the systems and techniques disclosed herein provide a single interface that enables easy and efficient switching between a representation of a threaded feature appropriate for generating marketing materials or the like and a threaded feature appropriate for three-dimensional (3D) printing applications, for example. In a typical implementation, the cosmetic thread is trimmed to geometry created after the cosmetic thread is created, which is unlike most (if not all) other cosmetic thread representations that maintain the same representation irrespective of subsequent geometry changes that would affect the thread.

More specifically, in various implementations, the systems and techniques disclosed herein involve accurately representing a threaded feature of an object in a computer-aided design environment with an enhanced cosmetic thread (enhanced relative to prior cosmetic threads) without suffering significant impacts of creating faces typically associated with the geometry of a threaded feature. In this regard, for example, by generating representative curves for start and end locations and a pitch wire connecting the start and end locations and determining the resulting geometry of the curves trimmed by any geometry created later in the design process, the systems and techniques disclosed herein provide the user with an accurate representation of the thread feature in its final form without the overhead of having to generate the faces required for physical model geometry.

Moreover, in various implementations, the systems and techniques disclosed herein facilitate representing a threaded feature cosmetically during the design process and quickly and easily having a "real" physical threaded geometry when needed for marketing material or production needs for example. More specifically, by combining the cosmetic and physical thread commands into a single interface, the user can easily switch from one type to the other as needed. In a typical implementation, this has the benefit of a single source of thread specification and reduces the number of features required by half. Reducing the feature count of a component has the benefit of reducing the time required to compute and generate the geometry required for each feature.

In a typical implementation, having a single interface from which the user can choose to display a cosmetic thread (typically for performance reasons) or a physical thread (typically for marketing or production reasons) involves having a single feature (represented, e.g., by a common data structure) in the model's history (e.g., stored in computer-based memory) for the cosmetic thread and the physical thread, rather than two discreet features that need to be manually suppressed or unsuppressed. The benefits for the user are halving feature creation and suppression control requirements.

Moreover, the cosmetic threads allow the user to accurately represent a threaded feature without the negative impact of generating model geometry for the faces of the thread. The systems and techniques, in an embodiment, takes cosmetic threads beyond the state of the art and provides the user with an accurate representation of the final thread result taking into account all geometry created between the cosmetic thread feature and the final design. The cosmetic thread feature can be created at any point in the feature history including, e.g., after the hole or shaft it is applied to and, depending on settings, will be computed after all other feature geometry has been computed thus giving an accurate representation of the thread based on any subsequent intersecting geometry.

The ability to switch from cosmetic to physical threads, or vice versa, provides the user with the performance benefits of the cosmetic threads with the visual and functional presentation of the actual thread as needed.

Other features and advantages will be apparent from the description and drawings, and from the claims.

### BRIEF DESCRIPTION OF THE DRAWINGS

FIG. 1 is a schematic representation of an exemplary computer for three-dimensional (3D) modeling of a threaded feature using computer-aided design.
FIGS. 2A through 2C show a few examples of prior methods for thread representation in a model of an object.
FIG. 3A is a perspective view image of a modelled object (component) with a cosmetic thread.
FIG. 3B is a perspective view image of a modelled object (component) with a physical thread.
FIG. 4 is a schematic representation of an exemplary computer network environment that may be used to implement the functionalities disclosed herein including, for example, the 3D modeling of threaded features.
FIG. 5 is a schematic representation showing a detailed implementation of the network environment represented in FIG. 4.
FIG. 6 is a flowchart representing an implementation of a process of creating, displaying, and switching between an image that contains a cosmetic thread and a different version of that image that contains a physical thread.
FIGS. 7A is a flowchart representing an implementation of a computer-based process of establishing thread definitions.
FIG. 7B is a flowchart representing an implementation of a computer-based process for processing data to support thread geometry construction.
FIG. 7C is a flowchart representing an implementation of a computer-based process of constructing thread geometry.
FIGS. 8A through 8I shows a sequence of views of two images having threaded features in a computer-aided design environment.
FIGS. 9A through 9G is a sequence of screenshots that show images of a modelled component with a threaded feature.
FIGS. 10A and 10B show examples of trimmed curves of a cosmetic thread applied to a shaft in an add material scenario (FIG. 10A) and in a cut material scenario (FIG. 10B).
FIGS. 11A and 11B show examples of trimmed curves of a cosmetic thread applied to a hole / circular cut feature in an add material scenario (FIG. 11A) and in a cut material scenario (FIG. 11B).

Like reference characters refer to like elements.

### DETAILED DESCRIPTION

This document uses a variety of terminology to describe its inventive concepts. Unless otherwise indicated, the following terminology, and variations thereof, should be understood as having meanings that are consistent with what follows.

For example, in general, the phrase, "computer-aided design" refers to the use of computers (or workstations) to aid in the creation, modification, analysis, or optimization of a design. A "design" refers to a plan or specification (e.g., drawing), typically stored in computer-based memory, for an object or system, including construction details for that object or system. The Solidworks^{®} or Catia^{®} computer programs, available from Dassault Systèmes SolidWorks Corporation, the applicant of the current application, are examples of computer-aided design programs. Each of these computer programs can incorporate a design tool, known as xDesign^{™}. As used herein, the phrase "computer-aided design" or "computeraided design environment" should be construed broadly to include or involve any computer software, device, or system that incorporates or can incorporate the systems and / or techniques disclosed herein that relate, for example, to threads.

A "threaded feature" or a "thread" is a helical structure used to convert between rotational and linear movement or force. An "external thread," for example, may be a ridge wrapped around a cylinder or cone in the form of a helix. An "internal thread," for example, may be a helix-shaped ridge on an inner surface of a hole.

The helix of a thread can twist in two possible directions, known as the "thread direction" or "handedness." Some threads are oriented so that the threaded item (e.g., a screw), when seen from a point of view on an axis of the object, through the center of the helix, moves away from the viewer when it is turned in a clockwise direction, and moves towards the viewer when it is turned counterclockwise. These are known as right-handed threads. Threads oriented in an opposite direction are known as left-handed threads. "Pitch" refers to a distance, along an axis of a threaded object, from the crest of one thread to the next.

The phrase, "cosmetic thread," as used herein, refers to a schematic visual representation of a thread (e.g., in a hole or on a shaft) that represents the attributes of a threaded feature (e.g., shaft or hole) without having to show the real "physical threads" on a model in a computer-aided design environment. Traditionally, cosmetic threads may have been no more than a texture map used to represent the approximate look of a thread on a shaft or hole. Typically, cosmetic threads do not change the geometry of the model itself and, therefore, create minimal impact on system performance. In some implementations, traditionally, cosmetic threads are accompanied by callouts, with additional details, in a drawing.

The phrase "physical thread," as used herein, refers to an actual, detailed visual representation of a physical, helical thread geometry on a threaded feature (e.g., shaft or hole). In a typical implementation, physical threads are required to facilitate three-dimensional (3D) printing of the threads, accurate mass property calculations, and finite element analysis involving the threads. Typically, representing a threaded feature in a model with a physical thread is much more demanding on system resources than representing the same threaded feature with a cosmetic thread. There are a variety of ways to create a physical thread. In a Solidworks^{®} environment, for example, physical threads can be created using a thread tool based on a thread profile library.

A "blind" thread is a thread in hole that that is reamed, drilled, or milled to a specified depth without breaking through to the other side of an object or workpiece. In contrast, a through hole is a hole that is made to go completely through the material of an object.

The phrase "processor" or the like refers to any one or more computer-based processing devices. A computer-based processing device is a physical component that can perform computer functionalities by executing computer-readable instructions stored in memory.

The phrase "memory" or the like refers to any one or more computer-based memory devices. A computer-based memory device is a physical component that can store computer-readable instructions that, when executed by a processor, results in the processor performing associated computer functionalities.

### Prior Technologies

Prior technologies exist for representing threaded features in computer-aided design.

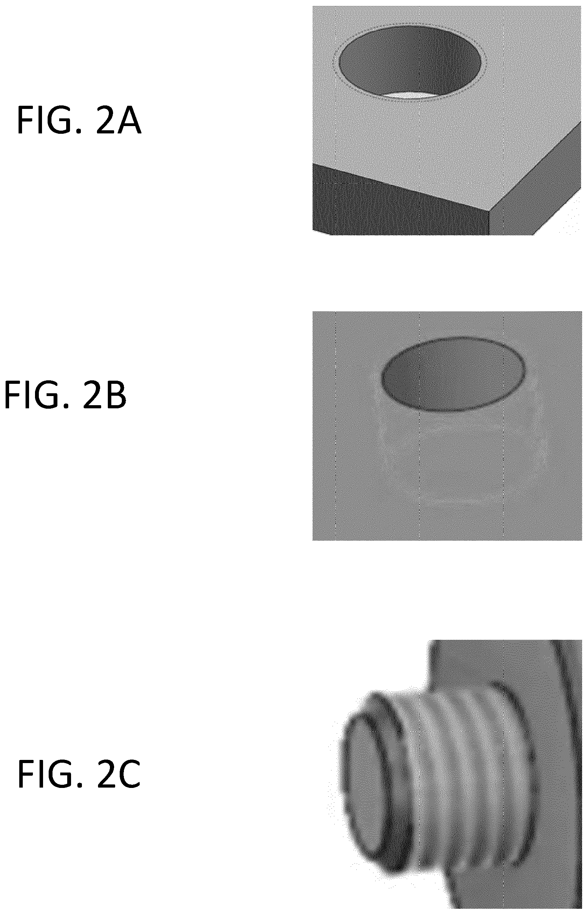

For example, a cosmetic thread feature is available in the Solidworks^{®} computer program. FIG. 2A shows an example of a threaded hole representation in this environment. As shown, one can see the starting location, but no additional information is provided to understand additional details (e.g., the depth, etc.) of the thread. The curve shown in the figure is a lightweight representation of a thread but one that conveys little information other than indicating that a thread has been applied to the geometry.

As another example, a cosmetic thread feature exists in the CREO^{®} computer program. FIG. 2B shows an example of a threaded hole representation in this environment. As shown, one can see the starting and ending locations for the thread as well as some wires connecting these two locations. The combined effect is that of a cylindrical representation giving the effect of size and depth but no indication of other thread characteristics (e.g., direction or pitch).

Yet another example is the cosmetic appearance feature in the Fusion 360^{®} computer program. FIG. 2C shows an example of a threaded hole representation in this environment. As shown, one can see a 2D appearance applied to a cylindrical face. The application of the appearance to the cylindrical faces does give the idea of where the thread is located but it does not account for the threaded portion on the chamfered (conical) face and may not accurately represent thread direction or pitch.

The systems and techniques disclosed herein differ from the prior software in technical approach, execution, and output and, as such, overcome or at least significantly minimize various technical limitations of the prior system. As mentioned above, the systems and techniques disclosed provide a relatively simple, efficient way of informing viewers of the true nature of a threaded feature in an object within a computer-aided design environment. Moreover, in various implementations, the systems and techniques disclosed herein provide a single interface that enables easy and efficient switching between a representation of a threaded feature appropriate for generating marketing materials or the like and a threaded feature appropriate for three-dimensional (3D) printing applications, for example.

Other technical differences may exist between various prior technologies and the systems and techniques disclosed herein.

### Technical Disclosure

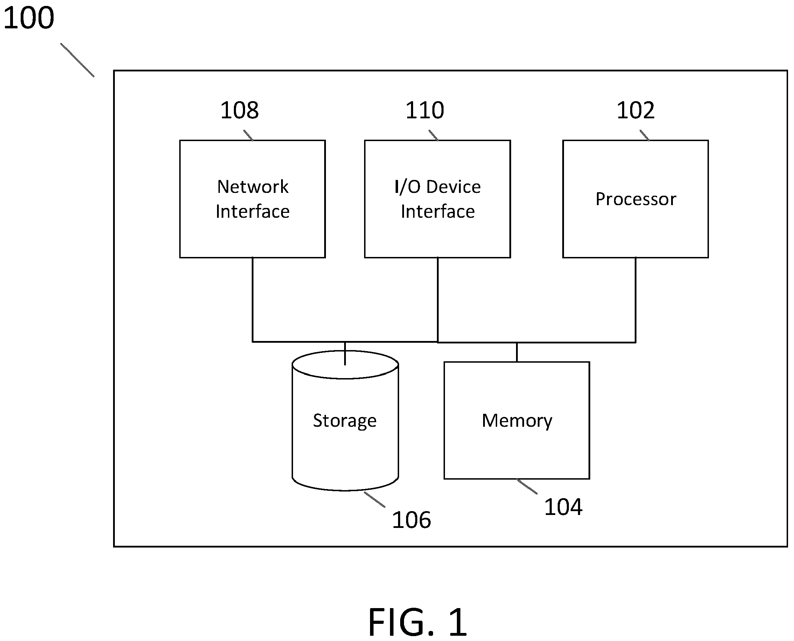

FIG. 1 is a schematic representation of an exemplary computer 100 configured to facilitate three-dimensional (3D) modeling of a threaded feature using computer-aided design. More specifically, in some implementations, the computer 100 is configured to enhance the representation of threaded features, particularly with cosmetic threads, in computer-aided design. Moreover, in some implementations, the computer 100 is configured to provide a single interface (e.g., at a computer display) that enables easy and efficient switching between different visual representations of a modeled object that includes a threaded feature - one in which the threaded feature is represented by a cosmetic thread, and another in which the threaded feature is represented by a physical thread. In a typical implementation, the cosmetic thread produced by computer 100 has an enhanced appearance relative to prior cosmetic threads. The enhanced appearance typically provides the viewer with more information about the exact nature and characteristics of the threaded feature represented by the cosmetic thread. Moreover, the enhanced appearance is created without burdening the computer's 100 finite resources to anywhere close to the degree that creating a physical thread would involve.

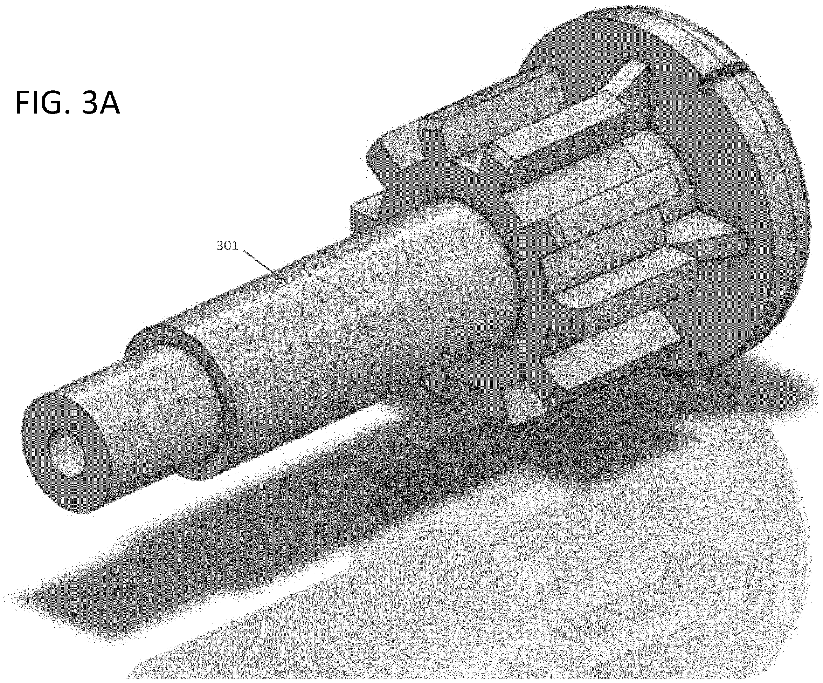

FIG. 3A shows an example of a cosmetic thread 301 that may be produced by computer 100. In the illustrated example, the cosmetic thread 301 represents a thread formed on a shank of a modeled component. As can be seen, the cosmetic thread 301 in the illustrated example is a schematic visual representation of the actual thread. Although schematic in nature, in the illustrated example, the cosmetic thread 301 provides the viewer with quite a lot of information about the thread it represents. The cosmetic thread 301 in the illustrated example is formed by a helical dashed line that curves around the shank of the modeled component and extends axially along the shank. The cosmetic thread 301 starts where the thread it represents starts and ends where the thread it represents ends. The cosmetic thread 301 also indicates thread direction as well as giving the viewer some sense of thread pitch. These additional details give the viewer far more information than the cosmetic threads shown, for example, in FIGS. 2A to 2C.

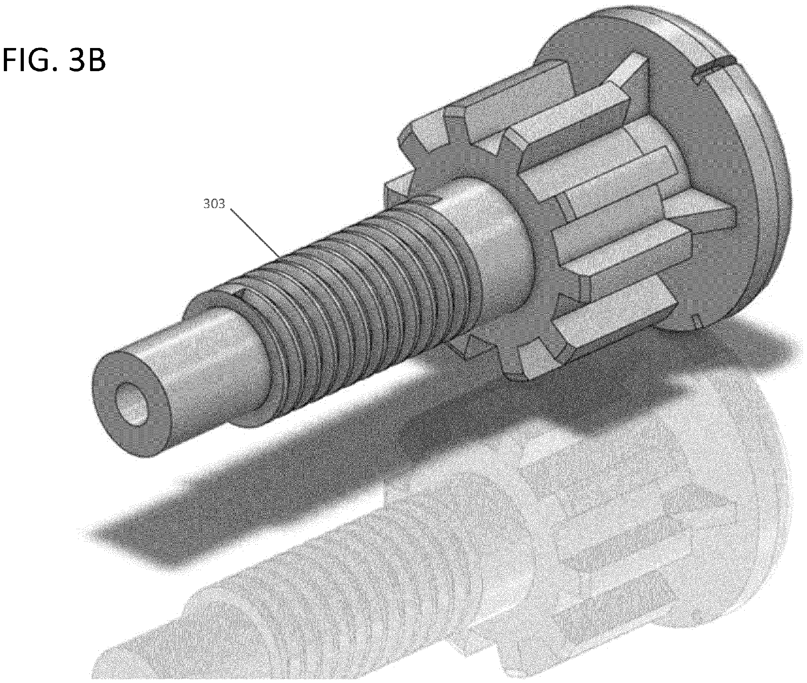

FIG. 3B show an example of a physical thread 303 that corresponds to the cosmetic thread 301 in FIG. 3A. In a typical implementation, computer 100 is configured to create the physical thread 303 in FIG. 3B as well as the cosmetic thread 301 in FIG. 3A. As can be seen, the physical thread 303 is a detailed visual representation showing exactly what a real-life version of the thread would look like. It includes all the physical, helical thread geometry that would be present in the real-life version of the thread intended to be represented the physical thread 303. In this regard, the physical thread 303 includes thread details that are represented in the cosmetic thread 301 including, for example, where the thread starts and ends, thread direction, and thread pitch. The physical thread 303 also includes all thread details needed to support advanced processes such as 3D printing of the thread and/or finite element analyses involving the thread.

Referring again to FIG. 1, the computer 100 has a processor 102, computer-based memory 104, computer-based storage 106, a network interface 108, an input/output device interface 110, and a bus that serves as an interconnect between the components of the computer 100. The bus acts as a communication medium over which the various components of the computer 100 can communicate and interact with one another.

The processor 102 is configured to perform the various computer-based functionalities disclosed herein as well as other supporting functionalities not explicitly disclosed herein. Some such functionalities include enabling users to create thread designs, creating cosmetic threads to represent the thread designs, creating physical threads to represent the thread designs, and enabling users to easily and efficiently switch or toggle between different views that include cosmetic threads or physical threads. Typically, the processor 102, together with other computer components, performs these, and other, functionalities by executing computer-readable instructions stored on a computer-readable medium (e.g., in 104 or 106). In various implementations, some of these functionalities may be performed with reference to data stored in the computer-readable medium and/or received from some external source (e.g., an input / output (I/O) device via the I/O device interface 110 and/or from an external network via the network interface 108).

The computer 100 has volatile and non-volatile memory. More specifically, in a typical implementation, memory 104 provides a form of volatile storage storing computer-readable instructions that, when executed by the processor 102, cause the processor 102 to perform or facilitate some (or all) of the computer-based functionalities disclosed herein. Moreover, in a typical implementation, storage 106 provides a form of non-volatile memory storing computer-readable instructions, such as instructions to implement an operating system, configuration information, etc. The various system memory resources (e.g., 104, 106) may store data, as well.

In a typical implementation, the memory 104 stores the computer-readable instructions that, when executed by the processor 102, cause the processor 102 to execute functionalities that present to a user at the computer 100 a computer-aided design program, with the functionalities disclosed herein incorporated therein. An example of a computer-aided design program suitable for adapting to incorporate the functionalities disclosed herein is the xDesign^{™} design tool that may be incorporated into the Solidworks^{®} or Catia^{®} computer programs, for example, which are available from Dassault Systèmes SolidWorks Corporation, the applicant of the current application. The computer-aided design program, so adapted, would include one or more (or all) the thread design functionalities disclosed herein.

The network interface 108 is a component that enables the computer 100 to connect to any one or more of a variety of external computer-based communications networks, including, for example, local area networks (LANs), wide area networks (WANs), such as the Internet, or the like. In various implementations, the network interface 108 can be implemented in hardware, software, or a combination of hardware and software.

The input/output (I/O) device interface 110 is a component that enables the computer 100 to interface with any one or more input or output devices, such as a keyboard, mouse, display, microphone, speakers, printers, etc. In various implementations, the I/O device interface can be implemented in hardware, software, or a combination of hardware and software. In a typical implementation, the computer may include one or more I/O devices (e.g., a computer screen, keyboard, mouse, printer, touch screen device, etc.) connected to the I/O device interface 110. These I/O devices (not shown in FIG. 1) act as human-machine-interfaces (HMIs) and are generally configured enable a human user to interact with the system 100 to access and utilize functionalities, particularly those related to computer-aided design.

In an exemplary implementation, the computer 100 is connected to a display device (e.g., via the I/O device interface 110) and configured to present at the display device a visual representation of an interface to a product design environment, such as the one provided by and within the SolidWorks^{®} computer program. The interface and its visual representation on the computer-based display device, in a typical implementation, provides the user with access to the thread design functionalities disclosed herein, and displays (e.g., on a display device coupled to the I/O device interface 110) a visual representation of a thread design (as a cosmetic thread and/or as a physical thread).

In some implementations, the computer 100 and its various components may be contained in a single housing (e.g., as in a personal laptop) or at a single workstation. In some implementations, the computer 100 and its various components may be distributed across multiple housings, perhaps in multiple locations on a network. Each component of the computer 100 may include multiple versions of that component, possibly working in concert, and those multiple versions may be in different physical locations and connected via a network. For example, the processor 102 in FIG. 1 may represent multiple discrete processors in different physical locations working together to perform processes attributable to the processor 102 in a coordinated manner. A wide variety of possibilities regarding specific physical implementations are possible.

In various implementations, the computer 100 may have additional elements not shown in FIG. 1. These can include, for example, controllers, buffers (caches), drivers, repeaters, receivers, etc. Furthermore, the interfaces (e.g., 108, 110) may include elements not specifically represented in FIG. 1, including, for example, address, control, and/or data connections to facilitate communications between the illustrated computer components.

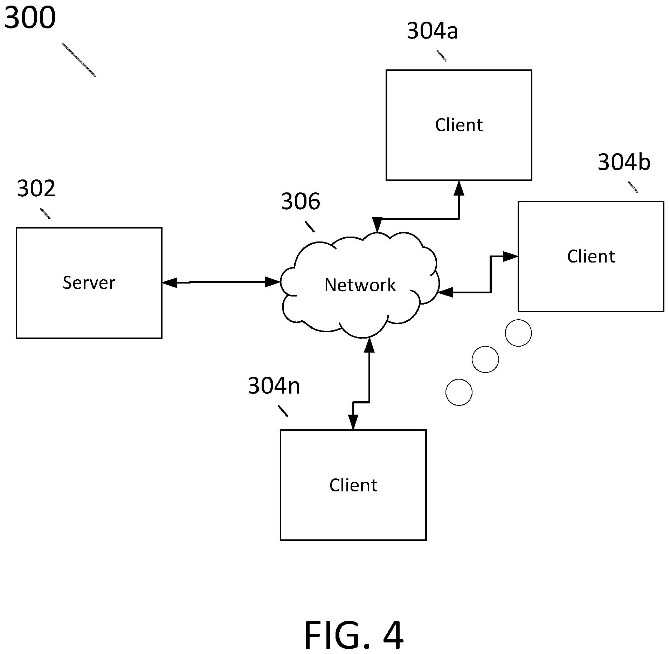

FIG. 4 is a schematic representation of an exemplary computer network environment 300 that may be used to implement the functionalities disclosed herein including, for example, the thread design functionalities.

The illustrated computer network environment 300 has a server 302, and several client devices 304a, 304b, ... 304n (or "clients") coupled to one another via a communications network 306. The communications network 306 enables the server 302 and clients 304a, 304b, . . 304n to communicate and interact with one another. In various implementations, each of the clients 304a, 304b, ... 304n, and server 302 has the same or similar types of components as those shown in the computer 100 of FIG. 1. For example, in various implementations, each client 304a, 304b, ... 304n has a processor, computer-based memory, computer-based storage, a network interface, an (optional) I/O device interface 110, and an internal bus that serves as an interconnect between the internal client components. Likewise, in various implementations, the server 302 has a processor, computer-based memory, computer-based storage, a network interface, an (optional) I/O device interface 110, and an internal bus that serves as an interconnect between the internal client components.

In some implementations, each client 304a, 304b, ... 304n may be configured to perform any one or more (or all) of the thread design functionalities disclosed herein without requiring involvement of the server 302. In some implementations, the thread design functionalities disclosed herein may be distributed between the server 302 and any one or more of the clients 304a, 304b ... 304n (e.g., the client where a human user is creating the threaded design or prompting the creation of or viewing a cosmetic thread and/or physical thread representation). In some implementations, a significant portion (or all) of the functionalities disclosed herein may be performed by the server 302 and the clients may simply provide a user interface for the user to access and leverage those functionalities. Various implementations may include one or more servers 302. In implementations that include more than one server, the servers 302 may collaborate with one another and/or with one or more of the clients 304a, 304b ... 304n to provide or perform the functionalities.

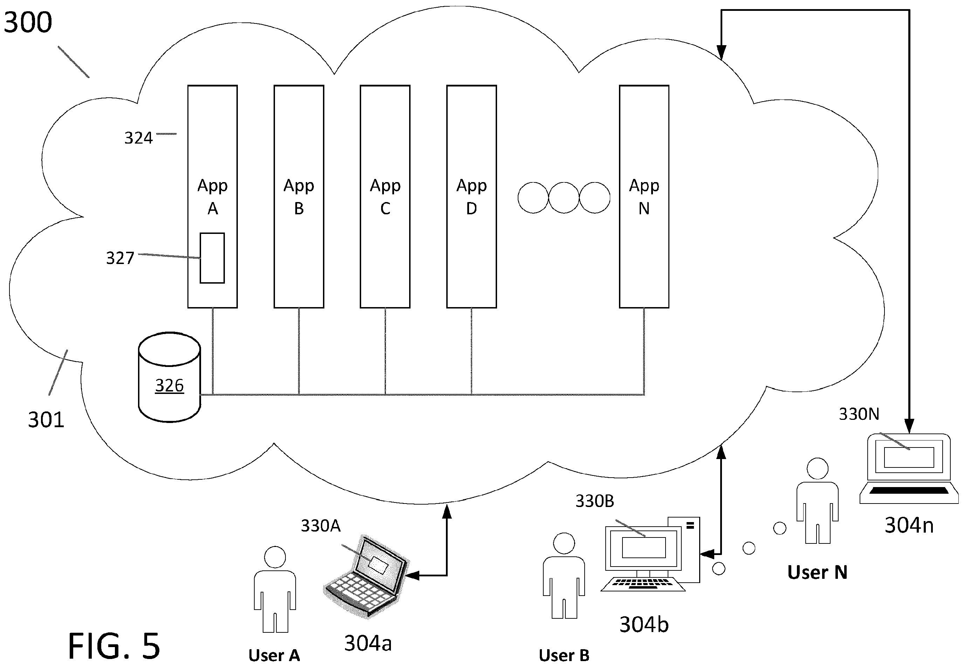

FIG. 5 is a schematic representation showing a detailed implementation of the network environment 300 represented in FIG. 4.

The network environment 300, as represented in FIG. 4, includes a cloud-based collaborative product design and development platform 301 that can be accessed and utilized by any one or more of a plurality of users (User A, User B ... User N) from any one or more of a plurality of computer-based user workstations 304a, 304b ... 304n. Each workstation 304a, 304b ... 304n provides a virtual environment within which the users (User A, User B ... User N) can work individually and/or collaboratively to design and/or view of one or more real-world parts or assemblies (including, e.g., modeled components, come of which may have threaded features). The network environment 300 represented in FIG. 3 is particularly well-suited to facilitate the functionalities disclosed herein.

The product design and development platform 301 in the illustrated network environment 300 has a plurality of software applications (App A, App B, App C, App D ... App N) 324, and a database 326 that stores data relating to the software applications. In a typical implementation, each software application resides as a set of computer-readable instructions on a computer-readable medium (such as 104 or 106 in FIG. 1) and the database 326 resides as a collection of data organized into a system on a computer-readable medium (such as 104 or 106 in FIG. 1). The data in the database 326 may be entered into the network environment 300 by one or more users (A, B, ... N) at one or more of the workstations 304a, 304b ... 304n and /or may be utilized or created by one or more of the software applications (e.g., in a thread design process or a process involved in representing a thread design as a cosmetic thread or a physical thread as disclosed herein).

The product design and development platform 301 can take on any one of a variety of configurations. In one exemplary implementation, the product design and development platform 301 may be based on the 3DEXPERIENCE^{®} computer software platform, available from Dassault Systémes, the applicant of the current application. In essence, the 3DEXPERIENCE^{®} platform provides a collaborative environment that empowers businesses and users to innovate in highly effective and efficient manners. It provides organizations a holistic, real-time view of their business activity and ecosystem, connecting people, ideas, data, and solutions together in a single environment.

The applications 324 can include any one or more of a variety of different types of computer software applications. Some examples include applications that enable users, individually or collaboratively, to design and/or view parts or assemblies, including threaded parts, for example. Examples of such applications that may be deployed on Dassault's 3DEXPERIENCE^{®} platform include xDesign^{™} computer software for use in computer-aided design, computer-aided engineering, computer-aided manufacturing, and/or visualization. In an exemplary implementation, software application (App A) in the illustrated implementation is just such a design program.

In the illustrated implementation, App A includes a thread design component 327 that supports and facilitates at least some (or all) of the functionalities disclosed herein that relate to thread design and/or viewing. The computer-based thread component 327 in the illustrated implementation is shown as being incorporated into App A directly. However, in some implementations, the computer-based thread component 327 may reside elsewhere (including in a separate physical component from App A or any of the illustrated applications 324). Regardless of where and how the thread component 327 is deployed, App A and, in some instances, any one or more of the applications 324 may be configured to access, utilize, and/or leverage its functionalities.

The network environment 300 is configured to present user-specific virtual workspaces (referred to as "user interfaces" 330a, 330b . . . 330n) at each of the user workstations 304a, 304b . 304n. Typically, each user interface 330a, 330b ...330n produces a visual appearance on a display screen of the workstations that include at least a viewing / editing area where a user can view and/or edit a design, and a variety of user-accessible and user-selectable graphical control elements that when selected or interacted with give the user access to the various design and/or viewing options.

The database 326 may be built upon any one or more of a variety of different computer-based database platforms. In general terms, the database contains an organized collection of data (in this case, the data would be at least related to a design that includes a threaded feature) stored electronically (e.g., in 104 or 106 of FIG. 1) and accessible from one or more computers (e.g., 304a, 304b ... 304n) typically through a database management system. Some of the data stored in the database 326 may be immutable and accessible (but not changeable) by various authorized users of the system (e.g., from any of the user interface devices 304a, 304b ... 304n). One specific example of database 326 is the Microsoft SQL Server, which a relational database system that stores and that is able to retrieve data as requested (e.g., by users or by other software applications (e.g., 324)) and that includes a relational database management system, developed by Microsoft Corporation. Other database platforms are possible. The stored data may relate to product designs developed or being developed by users (User A, User B ... User N), alone or, more likely, collaboratively, using one or more of the applications 324 (e.g., App A). In various implementations, a SQL query engine, for example, may interpret user requests as SQL commands and language to access data stored in a relational database system. A few examples of such query engines are Presto, Apache Drill, Cloudera Impala, and Apache Spark.

The user interfaces 330a, 330b ...330n appear on the screens of the workstations 304a, 304b ... 304n as virtual workspaces. In a typical implementation, each workspace displays design(s) for users to view and/or modify, as desired. In a typical implementation, if/when a user (at one of the user workstations) requests to access a design (e.g., stored in database 326), the network platform 301, in response to the user's request, returns a copy of the requested design to that user's workspace. The copy of the requested object that appears in the user interface is generally mutable. In other words, the user is able to modify the copy of the requested design that appears in the workspace. In some implementations, the user may utilize one or more of the system's applications to make any modifications. Once the user has made any desired modifications to the copy of the object that appears in the workspace, that user can publish (or save) the modified object back to the database 326. When this happens, a new version of the design is saved to the database 326. The new version includes the modifications that the user made in the workspace. Once the new version of the design is added to the database 326, typically, that new version is no longer mutable.

The various components of the product design and development platform 301 and other portions of the network environment 300 are coupled to one another in a manner that enables them to interact with one another and to provide users with access to, among other things, the functionalities related to thread design (including viewing cosmetic threads or physical threads) as disclosed herein.

The network environment 300 in FIG. 3 has multiple discrete components that may be in several different physical locations. However, in certain implementations, the systems and functionalities disclosed herein may be provided within and made available at a single user computer (e.g., a laptop or desktop computer), such as the computer 100 in FIG. 1 (with appropriate I/O devices, such as a display screen, keyboard, mouse, etc.). In some such instances, the database may be hosted within the computer 100 (e.g., in 104 or 106 in FIG. 1). In other instances, the database may be external to the computer 100 and accessible, via the network interface 108, to the external database. Other variations are possible as well.

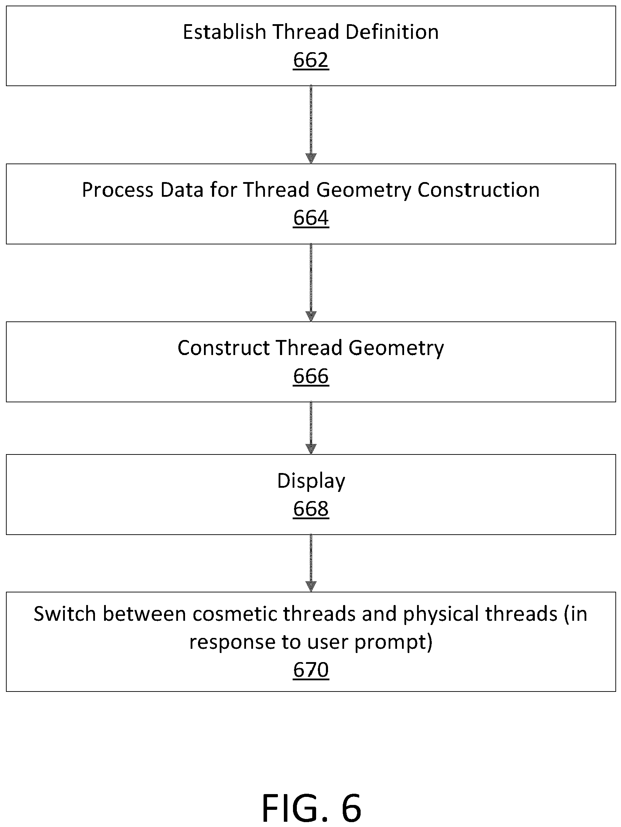

FIG. 6 is a flowchart that represents an implementation of computer-based process for constructing thread geometry for a model in a computer-aided design environment. For ease of discussion, the illustrated process is described herein as being performed with and by the computer 100, such as the one shown in FIG. 1, which would typically include appropriate I/O devices connected to the I/O device interface 110 to facilitate user interactions and viewing capabilities. These I/O devices may include a display screen (touch sensitive or otherwise), a keyboard, a mouse, printer, or any of a variety of I/O devices or combinations thereof that would enable a user to access and leverage the functionalities described herein. Although the description below assumes the processes are being performed by computer 100, it should be noted that the illustrated process could be implemented in any one of a variety of computer-based environments including, for example, those represented in FIG. 4 and/or FIG. 5.

The flowchart in FIG. 6 includes establishing thread definition data (at 662), processing data for thread geometry construction (at 664), constructing thread geometry (at 666), displaying (at 668), and switching between cosmetic threads and physical threads in common interface (at 670).

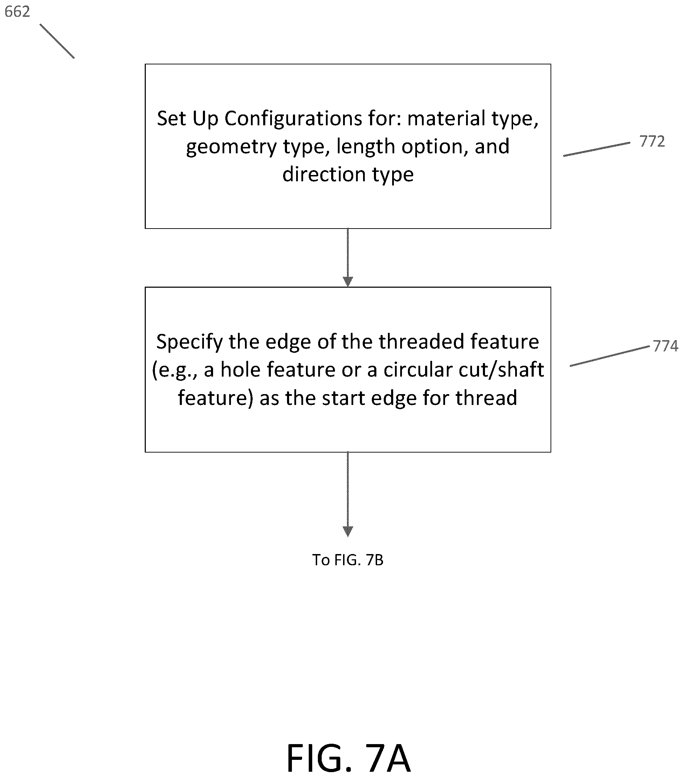

One example of establishing thread definition data 662 is detailed in the flowchart of FIG. 7A. According to the illustrated flowchart, establishing the thread definition data (at 662) includes setting up configuration information for a thread (at 772) and specifying an edge of the threaded feature on the modeled object as a start edge for the thread (at 774). In an alternative implementation, the system may be configured to enable a user to select a model face (cylindrical or otherwise) and from that determine a starting location, which may be for example, a terminus of the selected face. Other techniques may be possible as well.

The configuration information for the thread -- that gets set up at 772 - can include, for example, material type, geometry type, a length option, and direction type. In a typical implementation, material type specifies whether the thread is to be formed by cutting material or adding material, geometry type specifies whether the thread is to be a cosmetic thread or a physical thread, length option specifies whether the length / depth of the thread is to be blind or limited by a certain geometry, and direction type specifies whether the thread is to left-handed or right-handed. In various implementations, the configuration information for the thread can include other data, in addition to or in some alternative combination with some or all the aforementioned configuration information. For example, in some implementations, the configuration information can include one or more of the following: thread offset (e.g., in millimeters), thread distance (e.g., in millimeters), thread standard (e.g., American Society of Mechanical Engineers, ASME-based metric, Unified Thread Standard, etc.), thread type (e.g., straight, etc.), thread size (e.g., M8x1.25, etc.), etc. In various implementations, the computer 100 stores (e.g., in 104) information from one or more standards applicable to threads.

The thread depth can be limited by the physical extent of the main body on which it is being created. Imagine a hole cut through a block. In a typical implementation, the thread in the virtual environment will not extend beyond the length of the block unless the user forces it to. A design tool (e.g., the xDesign^{™} tool) may be configured to support several methods of limiting the depth of a feature (e.g., a threaded feature). These can include, for example, Blind, Through All, Up to Next, Up to Geometry, Up to Body, and Midplane. Up to Next generally creates the feature to the point of intersection with another model face. Up to Geometry generally creates the feature to the point of intersection with some model geometry that the user has selected. This could be a face, plane, vertex, edge, and so on. Up to Body generally creates the feature to the point of intersection with a selected body. A body can be thought of as something that is not connected to something else. E.g., two blocks separated by some distance with no connection between them. Midplane is akin to Blind in that it creates the feature to locations in two directions at the same time with a total combined depth of the midplane value. For example, a block extruded by Midplane with a depth of 2 inches typically will create geometry 1 inch in opposing directions away from the sketch plane for a total combined extrusion of 2 inches.

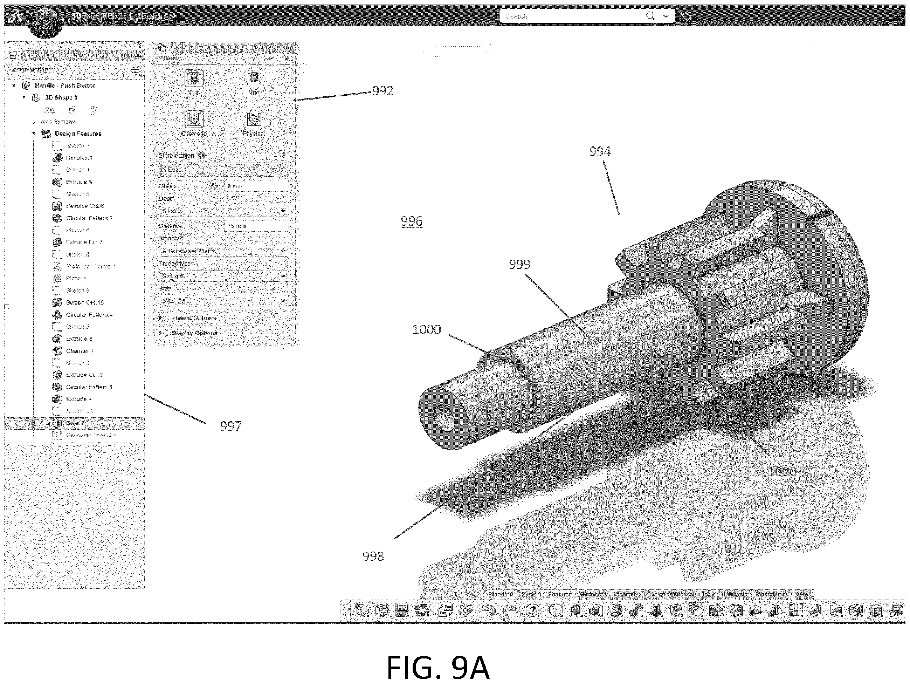

There are a variety of ways in which the thread configuration information can be set up (at 772). In one example, the computer 100 prompts or enables a human user to specify the thread configuration information. In this regard, the computer 100 may present, at its display, an onscreen menu (or thread property manager), an example of which is shown, and labeled as 992, in FIG. 9A, that prompts or enables the user to specify the thread confirmation information. As shown in the example of FIG. 9A, the thread property manager 992 may include, for example, user-fillable text fields and/or user-selectable dropdown menus to prompt or enable the user to provide the thread configuration information. In various implementations, the thread property manager 992 may provide the user with access to functionalities related to other thread options and display options.

Referring again to the flowchart of FIG. 7A, after setting up the thread configuration information (at 772), the process includes specifying an edge of the threaded feature on the modeled object as a start edge for the thread (at 774). As mentioned above, other methods for specifying a start location (e.g., by selecting a model face) may be possible.

There are a variety of ways in which the start edge for the thread may be specified. In one example, the thread property manager 992 includes a user-fillable field (see, e.g., the field labeled "start location" in thread property manager 992). In various implementations, the "start location" field may provide the user with a list of edges in the modeled object 994 that appears in the design field 996 of the user interface. In those implementations, the user may simply select one of the listed edges and the computer 100 treats the user selection as a designated start edge for the thread. In other implementations, the computer 100 enables the user to specify a start edge for the thread by pointing-and-clicking or something comparable to that. In a point-and-click approach, the user would navigate an onscreen pointer (e.g., by manipulating a mouse or tracking pad for the computer 100) to a location on the design field 996 that corresponds to the desired start edge for the thread and then left clicking or otherwise selecting the desired start edge. At that point, the "start location" field may populate with a notation that corresponds to the selected start edge. In the example shown in FIG. 9A, the notation in the "start location" field refers to, "Edge 1."

In a typical implementation, the computer 100 stores the thread configuration information provided by the user (at 772) and the start edge provided by the user (at 774) in computer-based memory (e.g., 104 in FIG. 1). This stored information is utilized, as discussed below, in creating the cosmetic threads and/or physical threads for display.

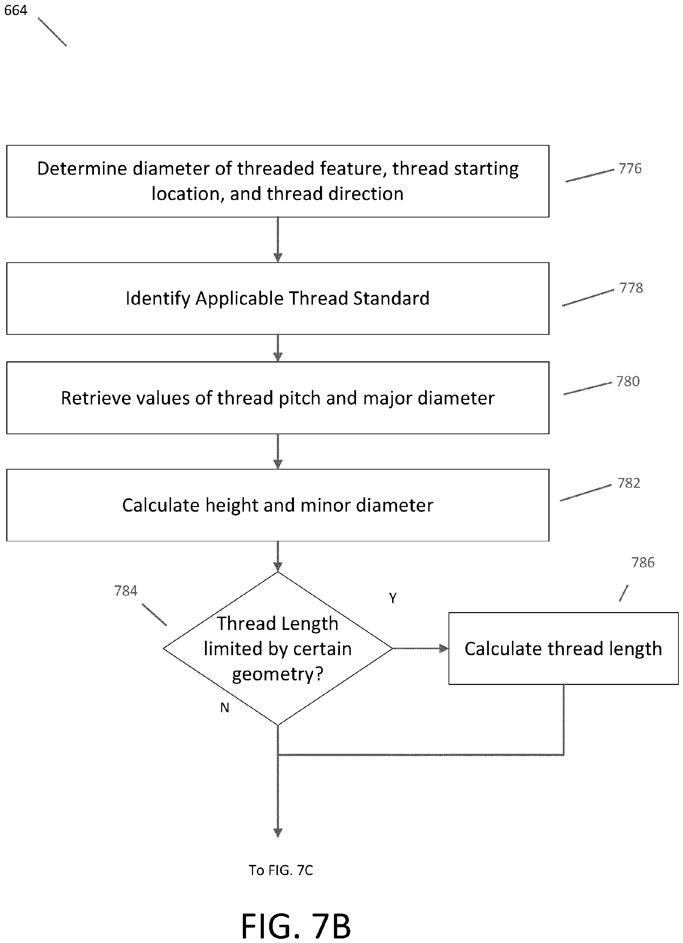

Returning again to FIG. 7A, after the thread configuration information is set up (at 772), and the start edge for the thread is specified (at 774), the process advances to FIG. 7B, which outlines an exemplary process by which the computer 100 processes data for thread geometry construction (664).

The process represented by the flowchart in FIG. 7B begins (at 776) with the computer determining a diameter of the threaded feature and determining the thread starting location and direction. In a typical implementation, these calculations and determinations are made based on the input edge associated with the threaded feature and the neighboring faces of the input edge. For example, in one implementation, the computer 100 first accesses the start edge (e.g., Edge 1) identified by the user (at 774, discussed above), then the computer 100 identifies a neighboring face of the start edge. If the identified start edge is at an end of a shaft, for example, the neighboring face may be identified as the outer cylindrical surface of the shaft. In a typical implementation, the computer 100 is configured to be able to identify the neighboring face of the designated start edge by matching one or more characteristics of the designated start edge to one or more characteristics of the neighboring faces in the modeled object. Once the computer 100 has accessed the designated start edge and identified the neighboring face, the computer 100 is able to identify the direction of the thread, which would be along the neighboring face and away from the designated start edge. Moreover, the computer 100 is able to determine the diameter of the thread based on characteristic data associated with the neighboring face stored in the computer memory. That characteristic data may include the diameter itself or other information about the size of the neighboring face's surface, from which the computer 100 can derive the diameter.

Next, in the illustrated implementation, the computer 100 (at 778) identifies an applicable thread standard. In some implementations, for newly created threads, the computer 100, by default, applies the best fit standard based on the calculated diameter of the threaded feature. If the threaded feature is a straight tapped hole, for example, the computer 100 may derive the thread standards from the hole standards. In a typical implementation, the computer 100 enables users to modify any standard that may have been identified by the computer 100 or specify other thread data.

Each thread standard generally has three key values: thread major diameter, pitch, and height. Thread minor diameter can be calculated (e.g., by processor 102) by subtracting two times the height from the major diameter. The best fit may be decided (e.g., again, by processor 102) by the following conditions: 1) the calculated diameter of the threaded feature (hole/shaft) has to be within the range of thread minor diameter and major diameter; and 2) if multiple standards exist for condition 1, for the cases of cutting material on a hole and adding material on a shaft, the standard producing the largest ratio of the difference between major diameter and calculated diameter over the height is identified (by processor 102) as the best fit standard; for the cases of adding material on a hole and cutting material on a shaft, the standard producing the largest ration of the difference between calculated diameter and minor diameter over the height is identified (by processor 102) as the best fit standard. Other approaches in this regard are possible as well.

Generally, a hole standard has the following components: 1) standard type: (e.g., ASME Inch, ASME Metric, DIN, ISO); 2) each standard type has a few hardware types (for straight tapped hole in ASME Inch, the hardware types are Bottoming Tapped Hole, Straight Pipe Tapped Hole, and Tapped Hole.), and 3) each hardware type has a list of sizing choices that determines the thread major diameter and pitch (so if a hole is straight tapped, its standard components (standard type, hardware type and sizing choice) are directly used by thread feature as its standard components).

Next, according to the illustrated implementation, the computer 100 (at 780) retrieves values of thread pitch and major diameter. The computer 100 may retrieve these values from tabulated data collections stored in computer-based memory (e.g., 104) based on the applicable thread standard (identified at 778) or from customized thread data provided by a human user if a standard is not being wholly relied upon.

Next, in the illustrated implementation, the computer 100 (at 782) calculates the height and minor diameter of the threaded feature. In a typical implementation, the height and minor diameter of the threaded feature can be calculated based on thread pitch and major diameter, which are thread characteristics that may be specified in the applicable thread standard or other thread data provided by the human user.

Next, according to the illustrated implementation, if (at 784) the thread length is limited by certain geometry, as established at 662, then the computer 100 (at 786) calculates the thread length. In a typical implementation, algorithm(s) are applied (e.g., by processor 102) to find the distance between the start location of the thread and the geometry specified as the limit. The calculated distance is designated (e.g., in computer memory) and considered by the computer system as the thread length. The algorithm(s) may involve calculating a difference between two points in a coordinate system that correspond to ends of the thread.

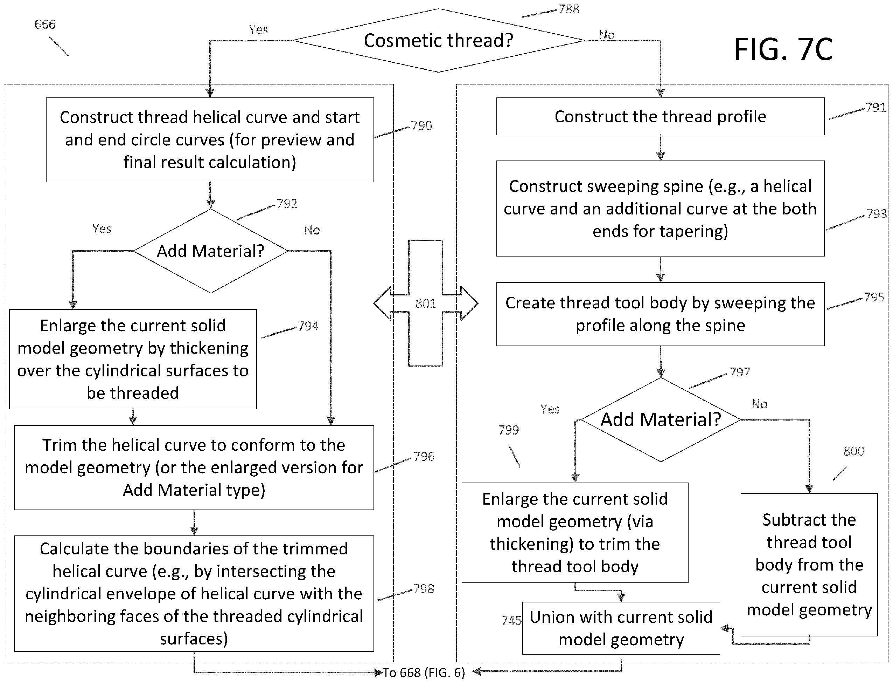

The process then advances to FIG. 7C to construct thread geometry (666).

According to the process represented by the flowchart of FIG. 7C, the computer 100 (at 788) determines whether the threaded feature is to be represented, for example, by a cosmetic thread or by a physical thread. In a typical implementation, the computer 100 makes this determination by accessing the thread definition information established at 662 and stored in computer-based memory (e.g., 104).

If the computer (at 788) determines that the threaded feature is to be represented by a cosmetic thread, then the computer 100 (at 790) constructs a helical curve for the thread and start and end circles. In some implementations, the computer 100 defines the start circle as having a diameter that corresponds with the diameter of the threaded feature (from 776) and located at the start edge (specified at 774). In some implementations (e.g., where the threads are not tapered), the computer 100 may define the end circle as having the same diameter as the start circle. Moreover, in one example, the computer 100 locates the end circle at a distance from the start edge, along a neighboring surface of the start edge, which corresponds to the thread length (e.g., calculated at 786). Additionally, in one example, the computer defines the helical curve based on thread height (from 782) and pitch (from 780) and as extending between the start and end circles. In a typical implementation, the computer 100 is configured to utilize the constructed helical curve and start and end circles to produce preview and final result calculations of the threaded feature, for example.

Next, the computer 100 (at 792) determines if the threaded feature is to be created by adding material or removing material. In a typical implementation, the computer 100 makes this determination by referencing the material type (add material or cut material) established as thread definition data (at 662) and stored in computer-based memory (e.g., 104). If the computer 100 (at 792) determines that the threaded feature is to be created by adding material, then the computer 100 (at 794) enlarges the solid model geometry by thickening over the cylindrical surface to be threaded. There are a number of possible ways in which the computer 100 thickens and determines how much to thicken the solid model geometry. In one example, thickening is done by utilizing an existing CATIA Convergence Geometric Modeler (CGM) operator. Basically, in this example, thickening is performed by offsetting the specified surfaces a certain distance and extending the neighboring surfaces to maintain the manifold shape. The actual thickening value is decided by the difference between thread wire radius and threaded feature radius plus a small value that is equal to e.g., 5% of the thread wire radius. According to one example, the computer determines how much to thicken the solid geometry by comparing a diameter of the feature to be threaded with an outer diameter of threads (from 780) and then thickening by an amount that would correspond to the outer diameter of the threads.

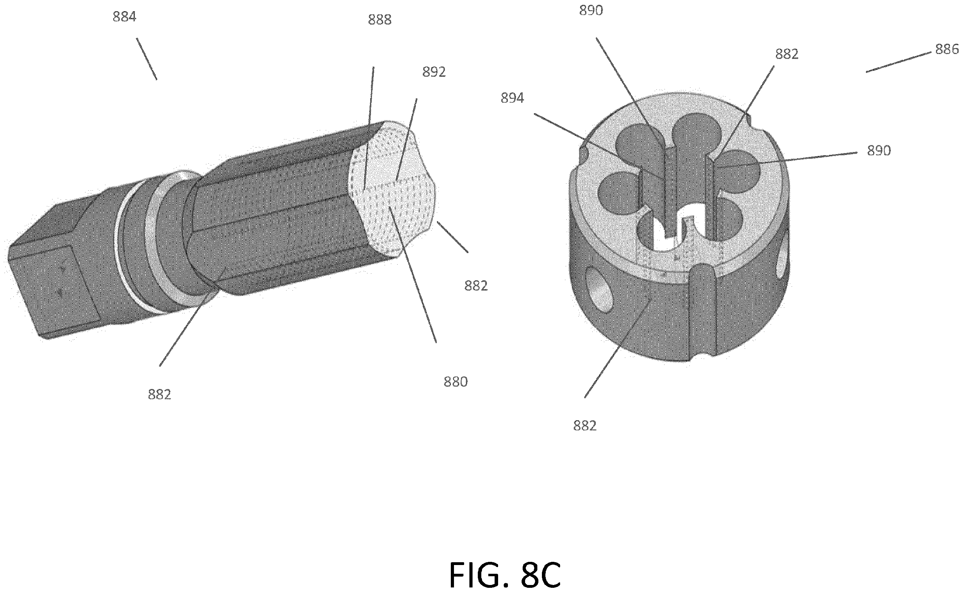

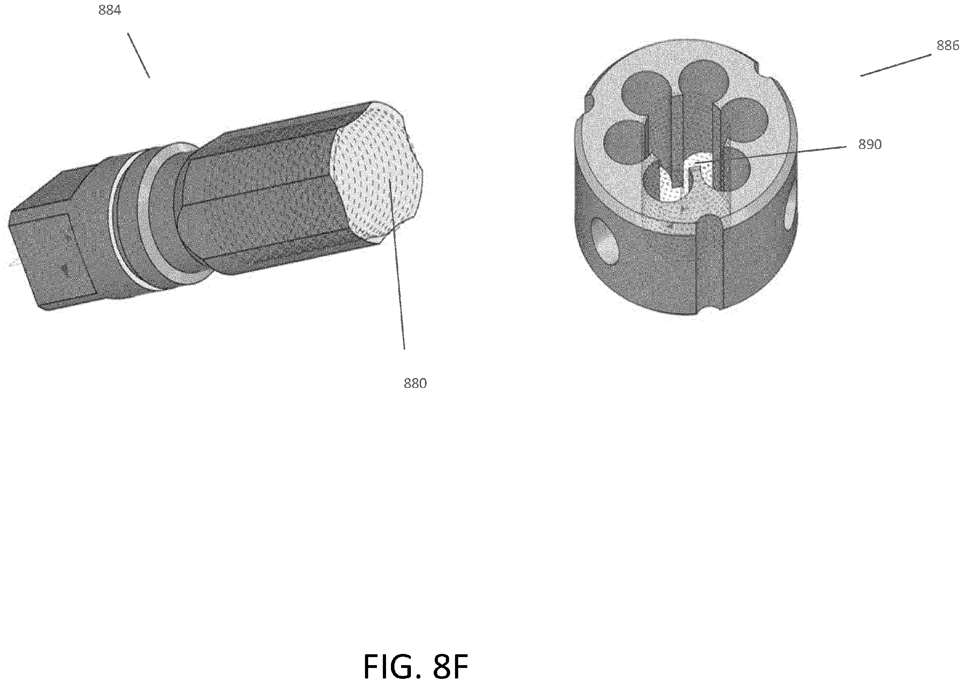

Then, the computer 100 (at 796) trims the helical curve (constructed at 790) to conform to the enlarged geometry of the model. In an exemplary implementation, the computer 100 trims the helical curve in accordance with the diameter of the enlarged threaded feature. Figure 8F shows an example of a helical curve before trimming and figure 8C shows the exemplary helical curve after trimming. The two figures also cover the change for start and end circles.

Otherwise, if the computer 100 (at 792) determines that the threaded feature is to be created by removing or cutting material, then the computer 100 skips step 794 and proceeds to trim the helical curve (constructed at 790) to confirm to the solid model geometry, without thickening.

Next, in the illustrated flowchart, the computer (at 798) calculates (identified) the boundaries of the trimmed helical curve. In a typical implementation, the computer 100 performs this calculation by intersecting a cylindrical envelope of the helical curve with the neighboring faces of the threaded cylindrical surface. The intersections of the helical curve with the neighboring faces of the threaded cylindrical surface in this section would be the boundaries of the trimmed helical curve. In one exemplary implementation an intersecting algorithm may be performed (e.g., by processor 102) between the cylindrical surface and each of the neighboring faces. This face-to-face intersection may be implemented in this example by using an existing CATIA CGM operator

If the computer 100 (at 788) determines that the threaded feature is to be represented by a physical thread, for example, then the computer 100 (at 791) constructs the thread profile. There are a variety of ways in which the computer 100 may perform this task. In one example, the computer 100 constructs the thread profile based on the data established, calculated, or specified throughout the various steps set forth in FIGS. 7A and 7B.

Next, according to the illustrated implementation, the computer 100 (at 793) constructs a sweeping spine (e.g., a helical curve and additional curve at both ends of the helical curve for tapering). If there is no taper, there will be no additional curve at the end of helical curve. This extra curve is added to the sweeping spine so that the thread end can gradually tapper down.

Next, in the illustrated flowchart, the computer 100 (at 795) creates a thread tool body by sweeping the thread profile along the spine. The phrase "tool body" as used here is a term for the body that may be involved in Boolean operations, for example, such as subtracting and union. Sweeping, in an exemplary implementation, may be performed (e.g., by processor 102) utilizing a CATIA CGM operator. Basically, the solid is created by sweeping a profile along a path (a.k.a. spine).

The computer 100 then (at 797) determines if the threaded feature is to be created by adding material or removing material. The computer 100 may make this determination by referencing the material type (add material or cut material) established as thread definition data (at 662) and stored in computer-based memory (e.g., 104).

If the computer 100 (at 797) determines that the threaded feature is to be created by adding material, then the computer 100 (at 799) enlarges the solid model geometry (by thickening) to subsequently trim the thread tool body and then unions (incorporates) the trimmed thread tool body with the current solid model geometry (at 745). Otherwise, if the computer 100 (at 792) determines that the threaded feature is to be created by removing or cutting material, for example, then the computer 100 (at 800) subtracts the thread tool body from the current solid model geometry and then unions the result with the current solid model geometry (at 745).

Next (after step 798, 799 or 800), the process advances to 668 in FIG. 6 to display a cosmetic thread or a physical thread on a display screen of computer 100. Typically, the cosmetic thread or the physical thread appears on the display screen superimposed or visually integrated into an image of the modelled object that includes the threaded feature.

The computer 100 (at 670) enables switching, easily and efficiently, between a first version of the modelled object with the cosmetic thread representing a threaded feature on the object, or a second version of the modelled object with the physical thread representing the threaded feature on the object. This ability to switch also is represented in FIG. 7C by dual directional arrow 801. In a typical implementation, switching is performed via a common data holding definition.

The data to support the functionalities disclosed herein can be structurally configured in any one of a variety of different ways. In one example, the data structures (common, decorative, and physical) may be configured in accordance with the following.

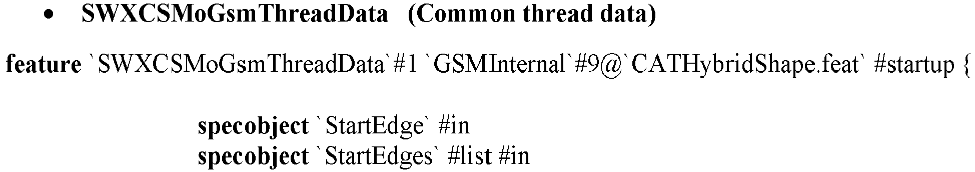

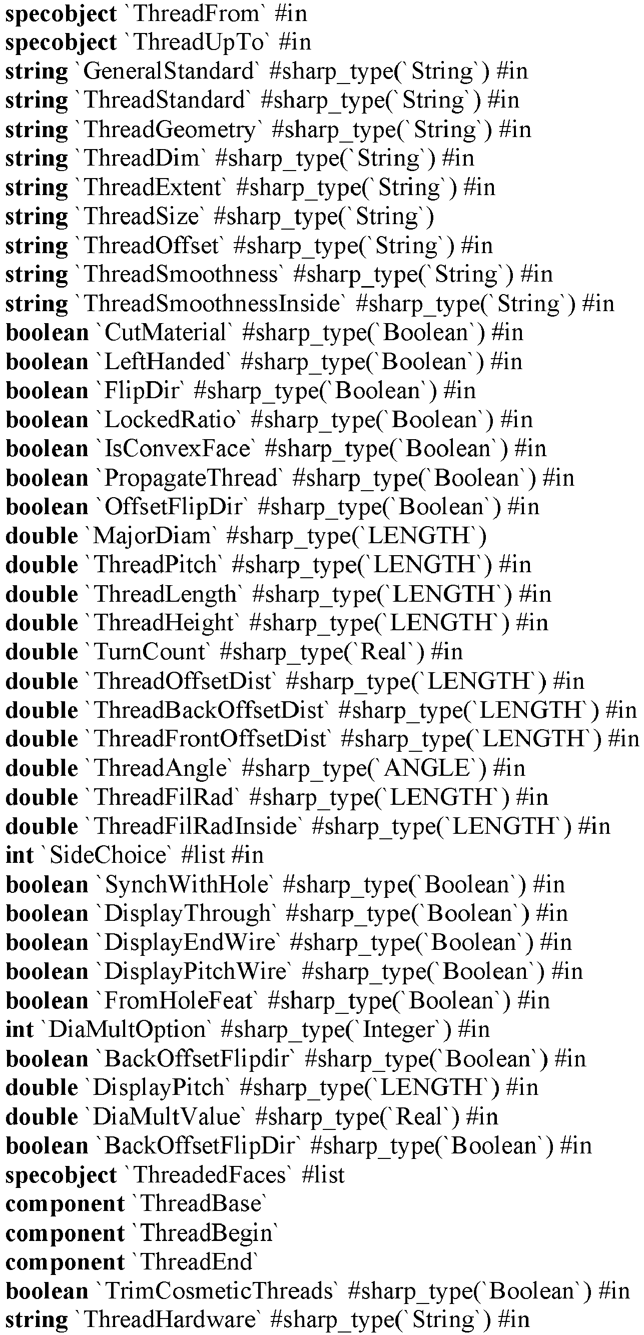

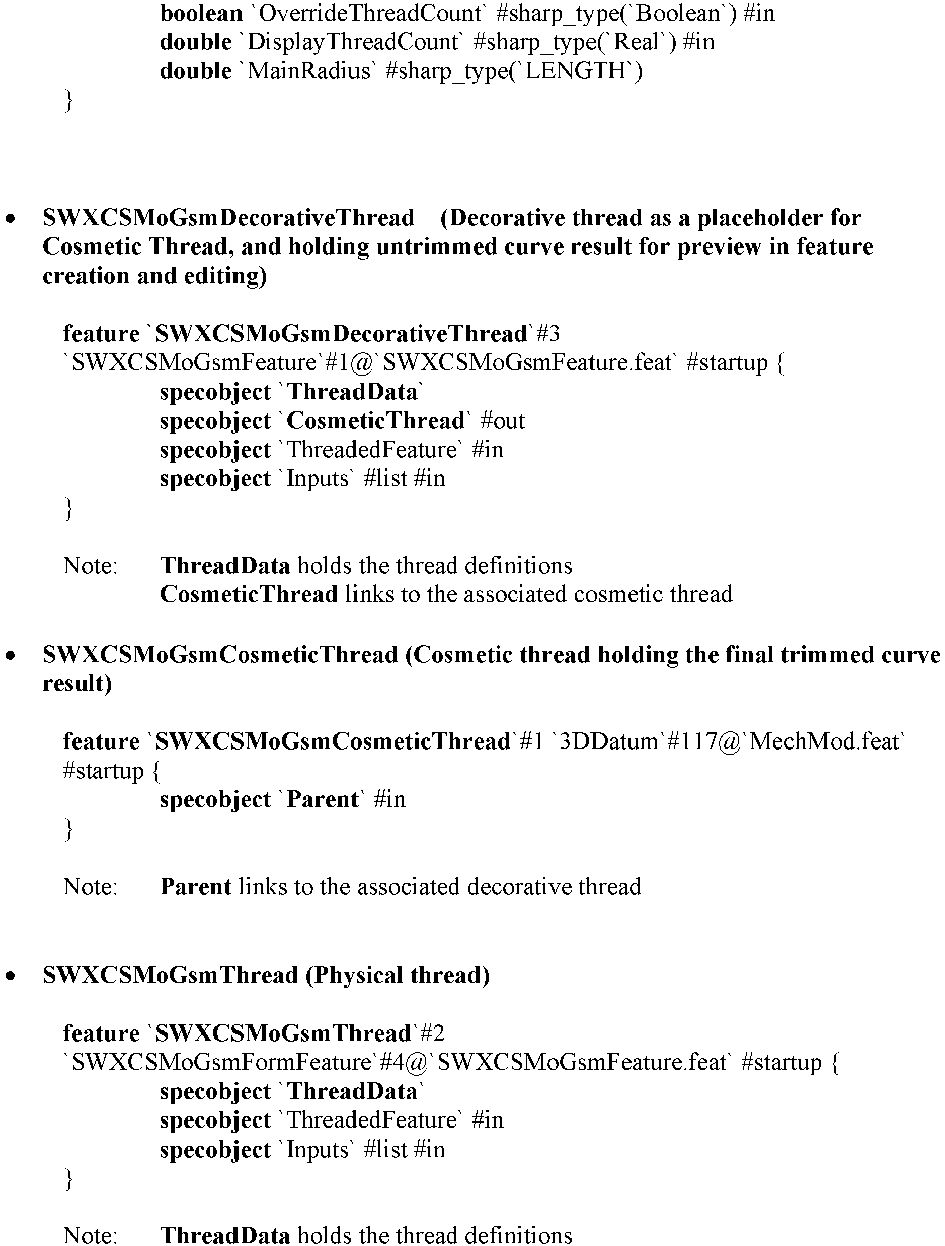

In view of the foregoing, it can be appreciated that, in some implementations, the workflow at the user interface would include: 1) Invoking thread feature functionality at the user interface, 2) specifying certain thread definition (or configuration) details including, for example, material type (e.g., cut material or add material), geometry type (e.g., cosmetic thread or physical thread), direction type (e.g., left-handed or right-handed), and/or length option (e.g., blind or limited by a specified geometry). Next, the user selects a circular edge associated with the threaded feature (a hole feature or a circular cut feature) as the start edge for threading. The user may specify additional settings such as display options, modify standards information and/or customize values of pitch and/or diameter, for example. The computer 100 is generally configured to display the geometry in a preview mode. The ability to switch between cosmetic and physical thread views is present in the preview mode and the geometry can be updated in the preview mode. The user can confirm settings to create a final geometry for the threaded feature.

Moreover, in view of the foregoing discussion, it can be appreciated that, in some implementations, after the start edge and the configurations are specified, the following data processing may be performed by the computer 100 to support thread geometry construction: 1) calculating a diameter of the threaded feature, and determining a thread start location and direction, 2) calculating the best-fit standard or deriving the thread standard if the threaded feature is a straight tapped hole feature, 3) retrieving the values of thread pitch and thread diameter from the standard tables or directly use customized ones (provided by a user) if the standards are not used, and 4) calculating the thread length if the length is limited by a specified geometry.

Thread geometry construction comes next in a typical implementation. Based on the definition and processed data, thread geometry can be constructed in two modes: preview and true result and may depend on the thread geometry type (cosmetic or physical).

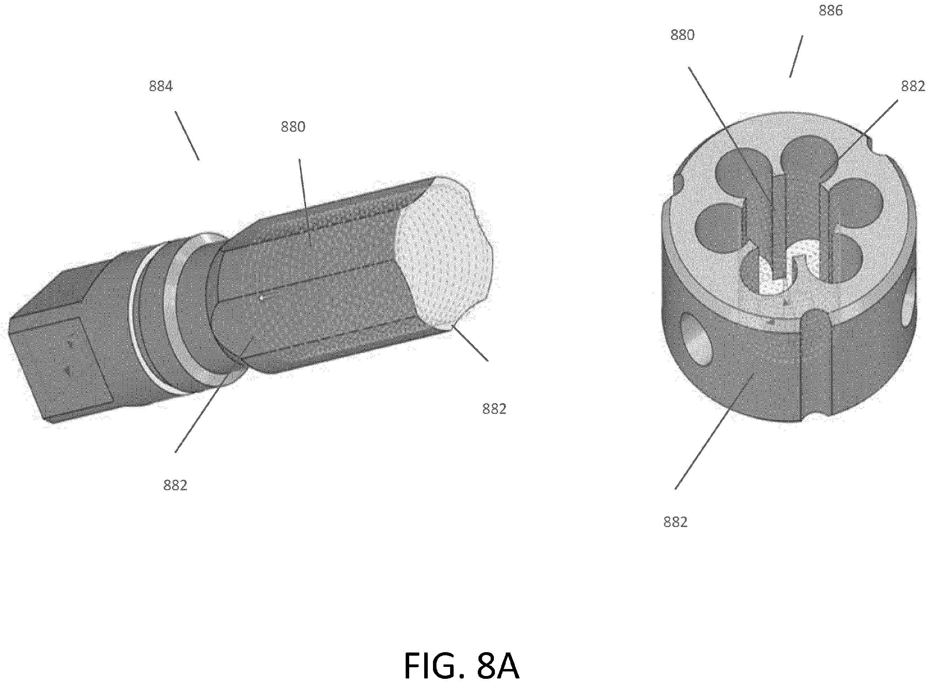

With respect to cosmetic thread geometry construction, unlike some regular design features such as extrusions and fillets that are history based, cosmetic features are global features, which means that, ultimately, the geometry of cosmetic thread must reflect the final model geometry. Therefore, in a typical implementation, the actual geometry of a cosmetic thread is constructed after the model geometry is finalized. The following, which references FIGS. 8A to 8C, describes steps in geometry construction in preview mode and true result mode.

First, the computer 100 constructs helical curves 880 and start and end circle curves 882 for geometry preview during feature creation (see, e.g., 790 in FIG. 7C).

FIG. 8A shows geometry previews of two modelled objects: a bit 884 with a shank portion, and a die 886 with an internal opening. The geometry previews show indications of the helical curves 880 and end circle curves 882 that correspond to the threaded features on the modelled objects. The helical curves 880 and end circle curves 882 on the shank of the bit 884 correspond to external threads, whereas the helical curves 880 and end circle curves 882 on the die 886 correspond to internal threads. The helical curves 880 and end circle curves 882 are located relative to the modelled object previews to align with the intended location of the threaded features on those objects.

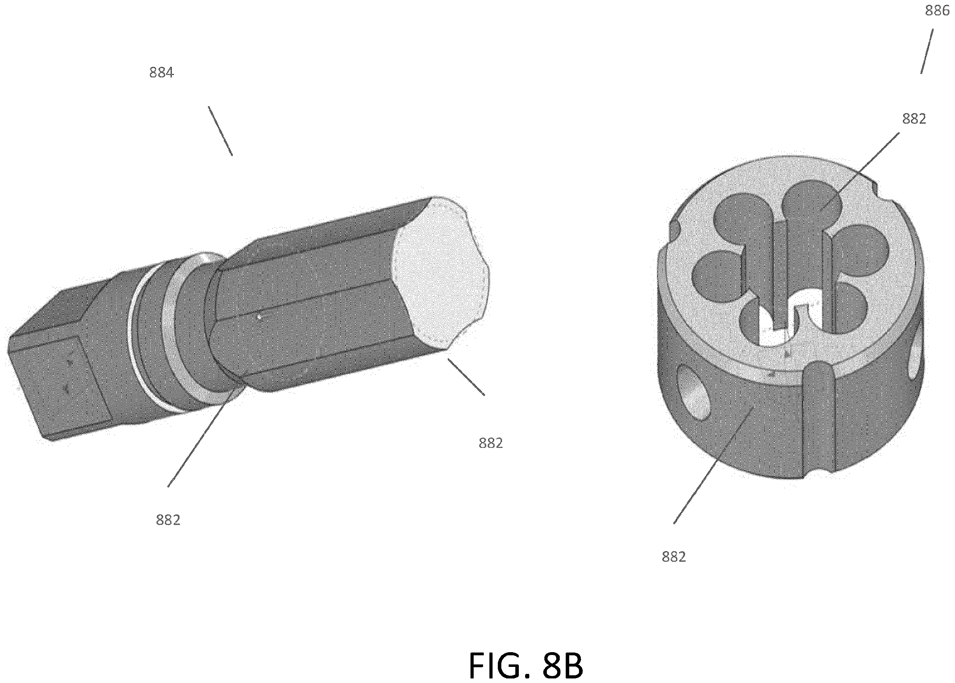

In a typical implementation, the helical curves 880 can be turned off in preview mode. Typically, this would leave the end circle curves 882 intact. FIG. 8B shows an example of the geometry previews of the two modelled objects, the bit 884 and the die 886, with their helical circles turned off. As shown, the end circle curves 882 are still present and visible. Moreover, the end circle curves 882 are located relative to the modelled object previews in the same manner as they were in FIG. 8A, aligned with the ends of the intended location of the threaded features on those objects.

To obtain the true geometry of a cosmetic thread, in a typical implementation, the helical curves (e.g., 880 in FIG. 8A) may be trimmed based on final model geometry (see, e.g., 796 in FIG. 7C). For an add-material thread (see, e.g., 792 FIG. 7C), considering the wires have no intersections with the model geometry, the model geometry may be enlarged (see, e.g., 794 in FIG. 7C) by thickening over the threaded surfaces and then used to trim the helical curves 880. The trimming may be implemented, for example, by re-limiting the helical curve by either the original target solid body for a cut-material option or the enlarged solid body for add-material option. In a typical implementation, re-limiting means limiting the curve to be inside the specified body. All the portions of the curves that are outside of the specified body are discarded and only the inside portions are kept as the result. The re-limiting operation essentially splits the helical curve into curve segments inside the target solid body and the curve segments outside of the target solid body. The curve segments inside the target solid body are kept as the trimming result.

To reflect the boundaries (see, e.g., 798 in FIG. 7C) of the cosmetic thread after trimming, intersections are performed between the cylindrical envelope (same diameter) of untrimmed wires and the neighboring surfaces of the threaded cylindrical surfaces. The result of these processes is shown in FIG. 8C, which shows the trimmed helical curves 880, 890, boundaries 892, 894, and end curves 882 of the cosmetic thread in the bit 884 and the die 886 after trimming.

In various implementations, the computer 100 is configured to display images of modelled objects with cosmetic threads in any one of a variety of different ways (see, e.g., 668 in FIG. 6).

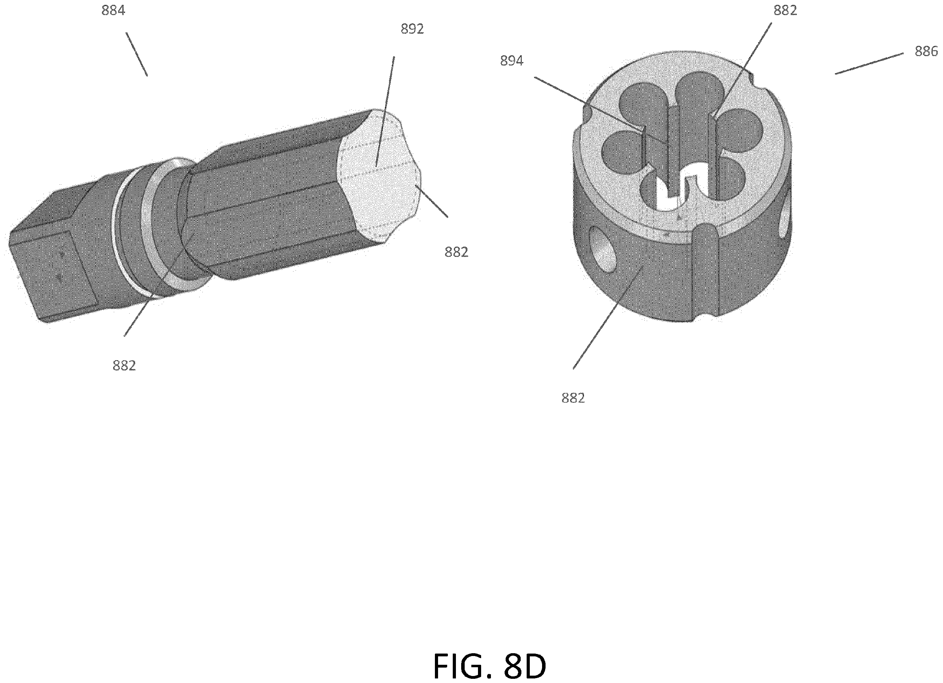

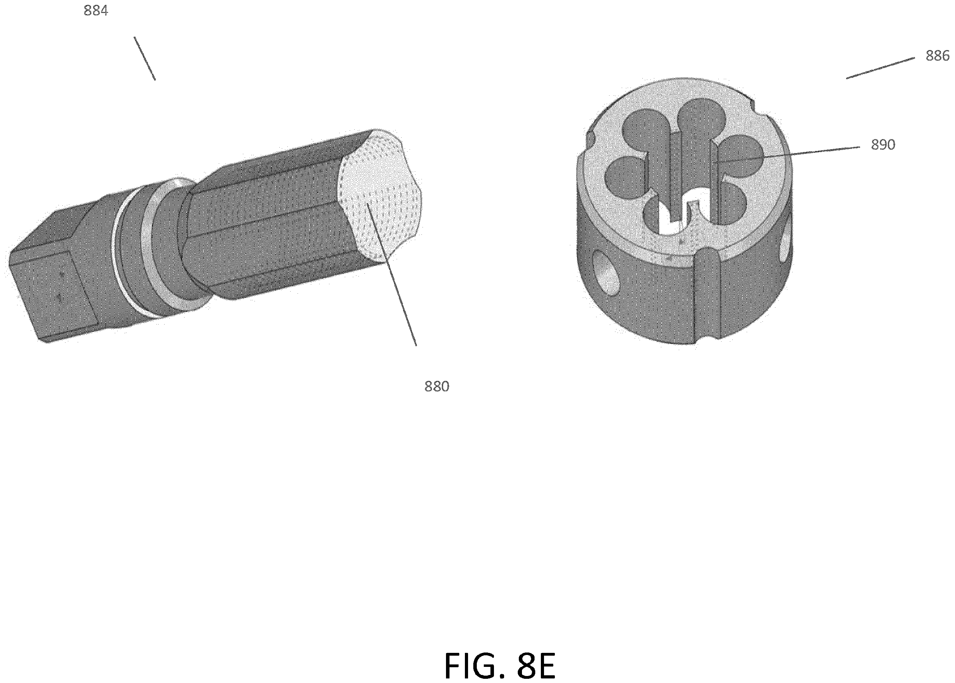

For example, in some implementations, the computer 100 is configured to display an image of the modelled object with the trimmed helical curves but without the end curves and boundaries, and alternatively to display an image of the modelled object with the trimmed end curves and boundaries, but without the helical curves. FIG. 8D shows examples of images of the modelled objects with the trimmed end curves 882 and boundaries 892, 894, but without the helical curves. FIG. 8E shows examples of images of the modelled objects with trimmed helical curves 880, 890, but without end curves and boundaries.

In some implementations, the computer 100 is configured to display an image of a modelled object with an untrimmed version of the helical curves, for example. This may result from the user, for example, turning off the computer's trimming functionality. In some instances, a user may wish to turn off the computer's trimming functionality due to the relatively large computational burden involved in the trimming and related processes involving intersections, etc. FIG. 8F shows examples of images of the modelled objects (bit and die) with untrimmed helical curves 880, 890. In various implementations, these images may (or may not) include untrimmed end curves as well.

As discussed above, the computer 100 is also configured to create physical thread geometry constructions. In a typical implementation, a physical thread is a regular history-based feature, and its final geometry is calculated at the time of its creation or editing. In some implementations, the physical thread is obtained by booleaning its original/trimmed tool body with the current final model geometry. In a typical implementation, booleaning may include, for example, either subtracting an original tool body from the current final model geometry for a cut material option or merging (union) the trimmed tool body with the current final model geometry for an add material option.

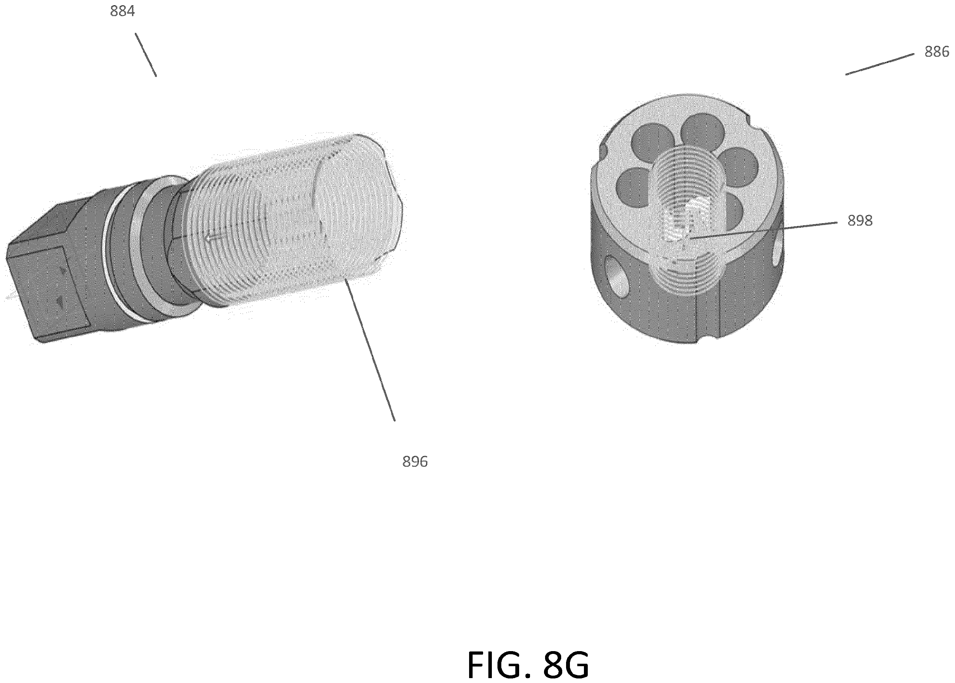

In an exemplary embodiment, the computer 100 performs the following steps in constructing the thread geometry in preview mode and/or true result mode: 1) constructing a thread profile (see, e.g., 791 in FIG. 7C), based, for example, on the values of pitch, major diameter, minor diameter, and height, 2) constructing a sweeping spine that contains a helical curve and an additional curve on the both ends for tapering (see, e.g., 793 in FIG. 7C), and 3) sweeping the thread profile along the spine to create thread tool body (see, e.g., 795 in FIG. 7C). The computer 100 may be configured to display the threaded tool body created using these steps in wireframe for quick preview. In a typical implementation, a wireframe is a visual guide that represents the framework of the threaded tool body. Examples of this are shown, for example, in FIG. 8G, which shows images of the modelled objects (bit and die) with threaded tool bodies shown in in wireframe 896, 898 in locations that correspond to the associated threaded features represented by the wireframe. Preview mode typically means the feature geometry is being displayed during feature creation and editing. True result mode typically means the feature geometry is being displayed after feature creation and editing.

For a cut-material thread, the computer 100 may calculate the true result by subtracting the tool body from the current model geometry (see, e.g., 800 in FIG. 7C). For an add-material thread, the computer 100 may enlarge the current model geometry by thickening over the threaded cylindrical surfaces and use the enlarged version of the model geometry to trim the thread tool body to reflect the boundary condition, and finally merging the trimmed tool body into the original model geometry via a union operation (see, e.g., 799 in FIG. 7C).

In various implementations, the computer 100 is configured to display images of modelled objects with true results (physical threads) in any one of a variety of different ways (see, e.g., 668 in FIG. 6).

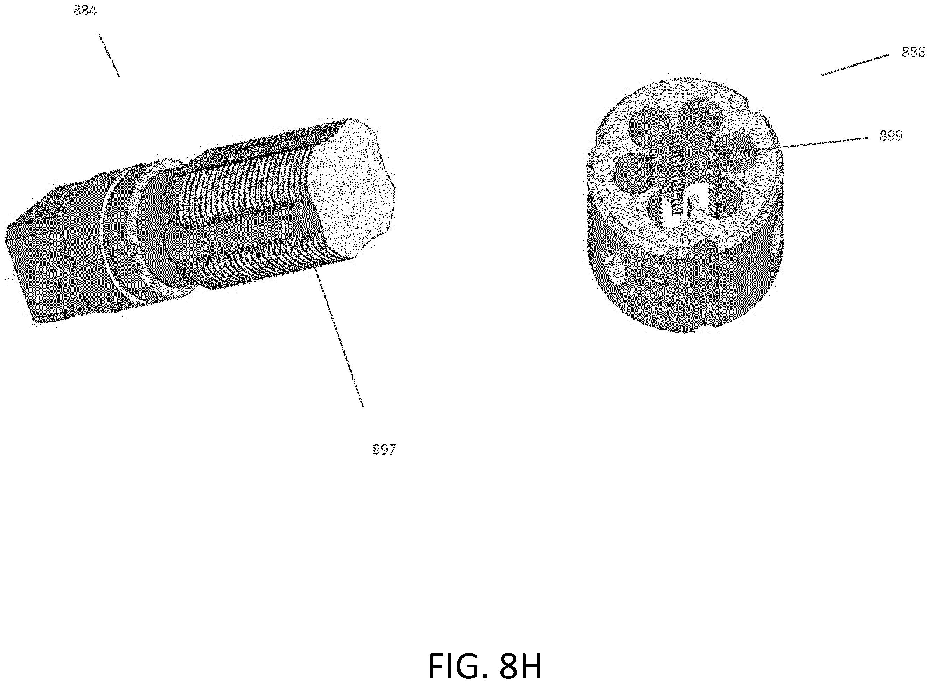

FIG. 8H shows examples of images of the modelled objects (bit 884 and die 886) with true result threaded features 897, 899 applied to the objects. These true result threaded features show exactly what the associated thread looks like and accurately represents all of its associated characteristics visually. The computer 100, in a typical implementation, is configured to display images such as these after performing the foregoing processes.

In a typical implementation, the computer 100 may also (or alternatively) be configured to present a preview of the true results (e.g., during feature creation). This, however, may not always be advisable, especially when constant user interface (UI) changes (such as length changes from the dragging of an onscreen manipulator) are involved.

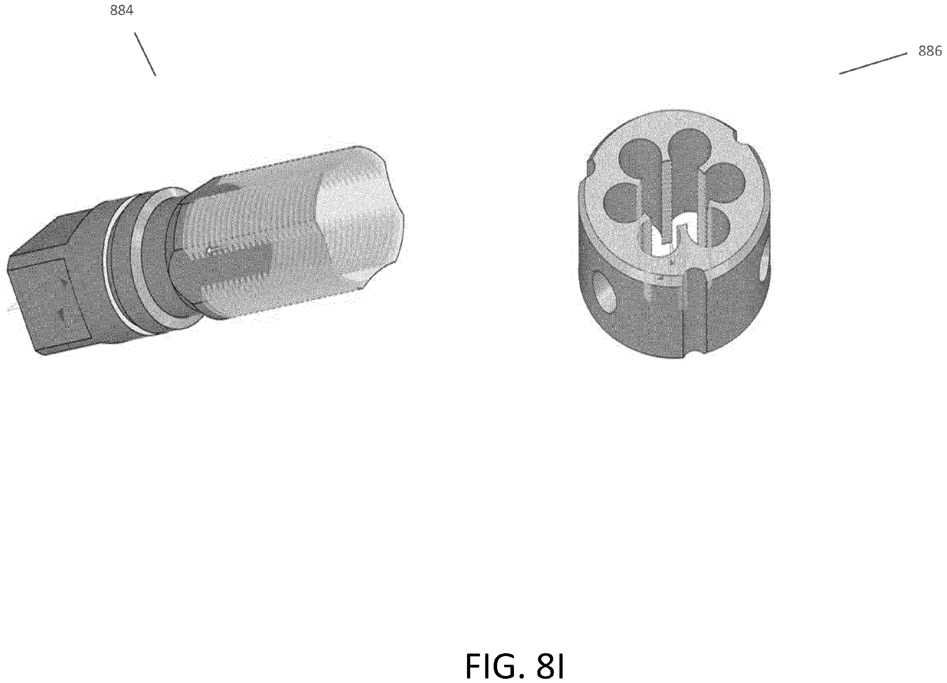

FIG. 8I shows examples of images of the modelled objects (bit 884 and die 886) previewing the true results (e.g., during feature creation).

The computer 100, in various implementations, is configured to facilitate switching between cosmetic threads and physical threads.

Thus, in a typical implementation, a user can create either a cosmetic thread or a physical thread first and then can switch to the other type during feature creation or feature editing (see, e.g., 670 in FIG. 6). Although cosmetic threads and physical threads create different geometries with different scopes, they do share common thread definitions. The common thread definitions may be stored in computer-based memory and include, for example, the references, the sizing parameters, standard settings and various options for geometry control and display. In an exemplary implementation, the common thread definitions include the thread definitions (established at 662 / 772), which includes material type, geometry type, length option, and direction type. In some implementations, the common thread definitions also include data identifying a start edge for the threaded feature (specified at 774). Moreover, in some implementations, the common thread definitions include other data (determined at 664) including diameter of threaded feature, thread direction, applicable thread standard or other data specified by a human user, thread pitch, thread major diameter, thread height, thread minor diameter, and (optionally) thread length. Variations in the common thread definitions are possible. In a typical implementation, the common thread definitions may act as a sublevel feature contained by the threaded feature.

In a typical implementation, additional data unique to each thread type (cosmetic and physical) may be directly held by either the cosmetic thread or the physical thread. This additional data may include, for example, data identified or created in constructing the cosmetic and physical thread geometries (at 666).

In a typical implementation, a user request to switch between thread types may cause the computer 100 to create one of the types of the threads (e.g., the one requested) and to delete the other type of thread (e.g., the one the user is asking to move away from). If, for example, the user requests switching from viewing an image of a modelled object that includes a cosmetic thread to viewing instead an image of the modelled object that includes a physical thread, then the computer 100 responds by creating the image of the modelled object that includes the cosmetic thread and deleting the image of the modelled object that includes the physical thread. The user may then utilize the image of the modelled object that includes the physical thread in the computer to 3D print a real-world version of the modelled object.

When the computer 100 switches between the cosmetic thread and the physical thread, the newly created thread simply takes over the common data before the to-be-switched thread is deleted, which prevents the unnecessary data recreation and/or data transferring. In a typical implementation, an initial switch from a physical thread to a cosmetic thread may result in the computer 100 removing geometries from the physical thread, whereas an initial switch in the other direction may result in the computer 100 creating new geometries for the physical thread. The removing and adding of geometries in the model typically follows history-based update handling, thus the reference update for downstream features will be handled systematically. History-based modeling is a de facto modeling technique in certain major CAD packages. Here we use this term to mean that, in an exemplary implementation, a physical thread behaves exactly as traditional modeling features that follow history-based modeling. As a cosmetic thread is a global feature (e.g., holding a wire body for display), it does not participate in history-based updates in the model geometry, but its final result will be always calculated based on the finalized model geometry from any modeling operations that triggers a model change.

FIGS. 9A to 9G are a sequence of screenshots showing a user interface in the xDesign^{™} computer-aided design (CAD) system.

The screenshot of FIG, 9A, for example, has a design field 996, a design manager 997 of user-selectable options, and a thread property manager 992 that prompts or enables the user to specify the thread confirmation information. The design manager 997 in the illustrated implementation sequentially lists, from top to bottom, the features in the order the user created them. The illustrated thread property manager 992 includes user-fillable text fields, and user-selectable options and dropdown menus to prompt or enable the user to provide the thread configuration information. The information that the thread property manager 992 in the illustrated implementation enables a user to specify includes thread type (cut vs. add, and cosmetic vs. physical), thread start location, offset, depth, distance, standard, thread type, size, and other thread options (e.g., quick preview, taper ends, and handedness), and display options. A modelled object (component) 994 appears in the design field 996. Notably, the cosmetic and physical selectable options are visible on one common screen, enabling the user to easily switch or toggle between a view containing a cosmetic thread and a view containing a physical thread.

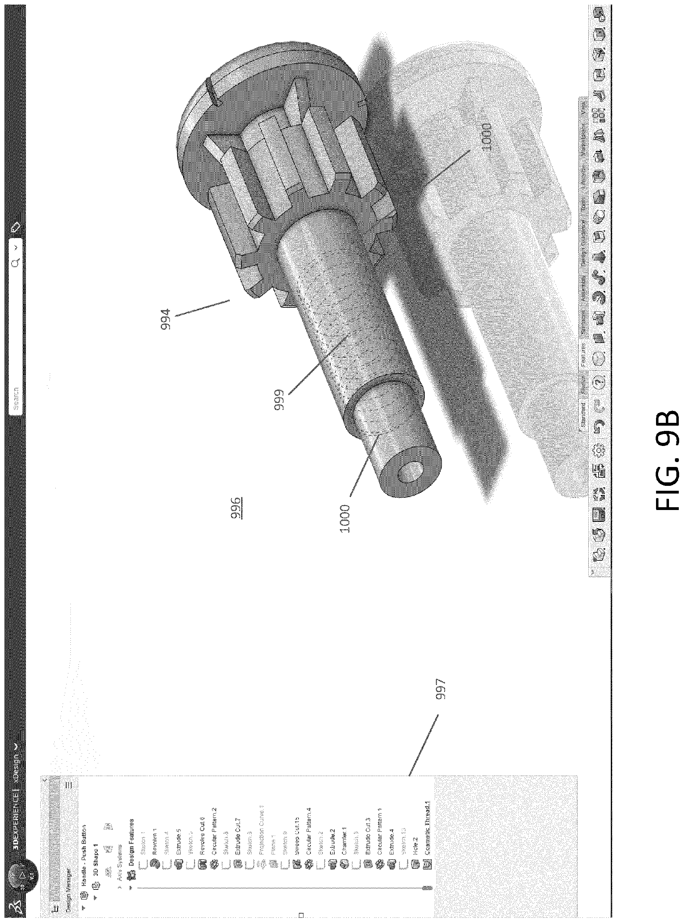

In FIG. 9A the user would be creating a cosmetic thread on a shank of the component 994. There are no downstream features in the model so, aside from color-coding to differentiate the preview from the final result perhaps, the preview (shown in FIG. 9A) and final result (shown in FIG. 9B) are substantively the same. The preview version of the cosmetic thread 998 in FIG. 9A includes a helical curve 999 and end circles 1000, as does the final result version in FIG. 9B.

In the FIG. 9B version, the cosmetic thread 998 is shown on feature creation. Since it is the last feature in the tree there are no downstream features to affect its shape.

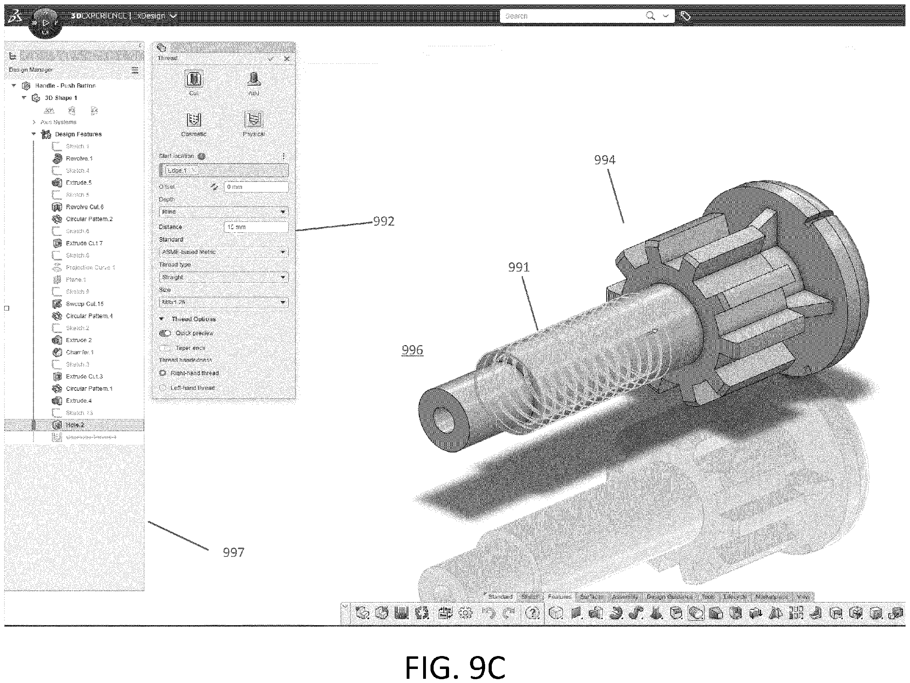

In FIG. 9C, the user has edited the cosmetic thread feature and has changed it to a physical thread. There are no changes to the user-facing data driving the feature. The only changes are the Display Options controls are no longer valid and the Thread Options has new controls to allow the user to generate a quick (non-Boolean) wireframe preview 991 and to taper the ends of the physical thread. A Boolean operation is a process (e.g., by a computer-based processor) of combining two or more things to form a new thing. In the case shown here, the thread tool body is simply shown on the screen and does not take into consideration any of the geometry it will be cut from or added to. It is simply a set of circular and helical wires. When the tool body takes into consideration the geometry it will be cut from or added to, it may be considered a Boolean operation.

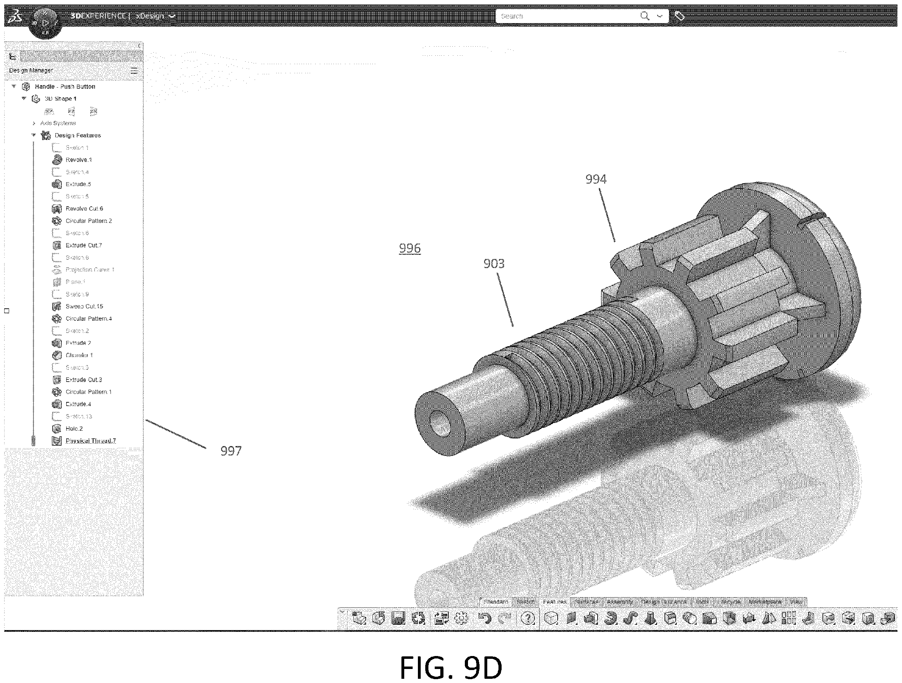

In FIG. 9D, there is a physical thread 903 cut into the component and the name of the feature in the tree (in 997) has changed (e.g., from cosmetic thread) to physical thread.

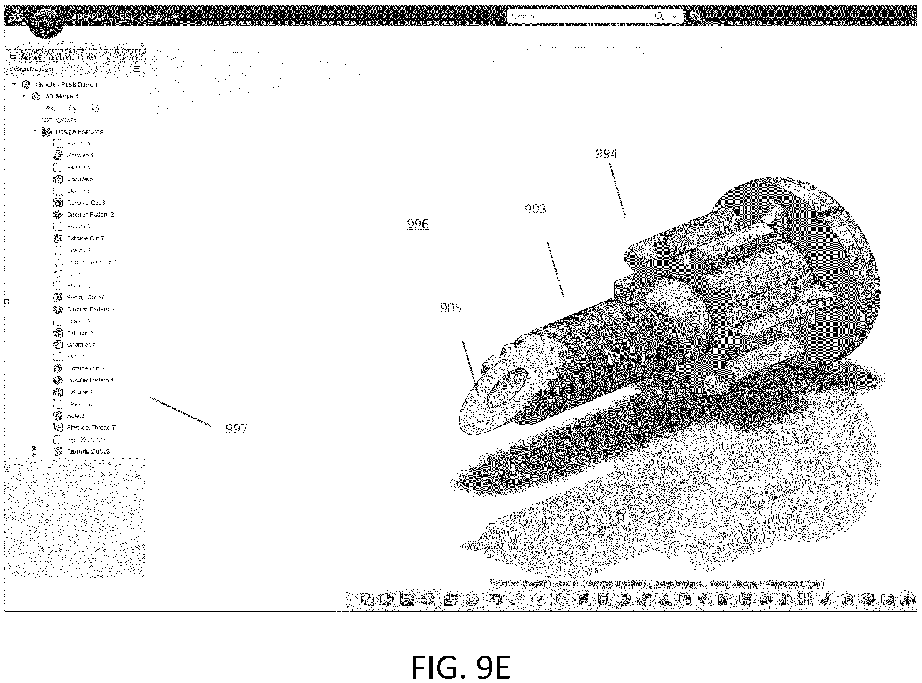

In FIG. 9E, the user has created an additional cut 905 across the geometry, significantly altering the thread. This is typical behavior for physical geometry where downstream features alter them.

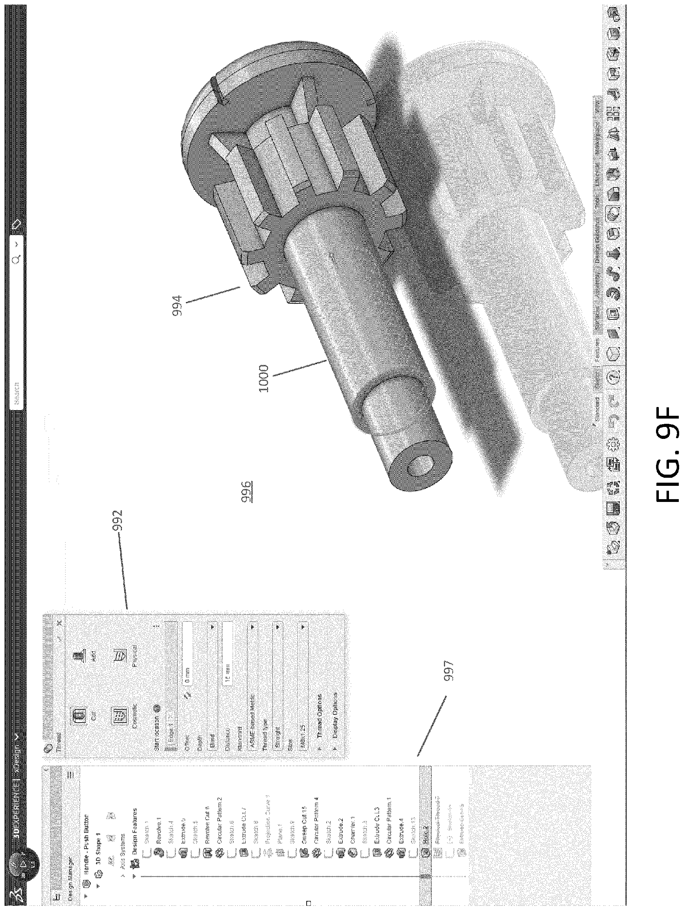

In FIG. 9F, the user has edited the physical thread feature and has changed it to a cosmetic thread 1000. Since the edited feature was created before the cut was added, the cut (shown in FIG. 9E) is not visible in the graphics area and the cosmetic thread appears in its full, uncut preview.

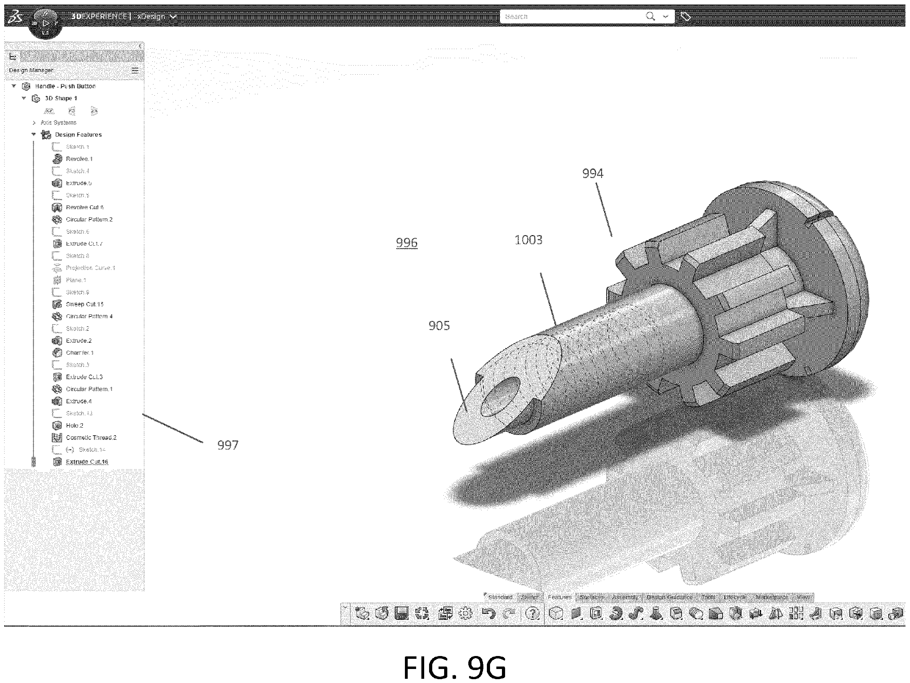

In FIG. 9G, the cosmetic thread is now a trimmed cosmetic thread 1003 that matches the cut that the user added after the thread was created. This is because the cosmetic version of the feature is evaluated at the end of the feature tree after all other geometry modifications have been made. This way, the user gains a true understanding of the thread even though the physical geometry is not present.

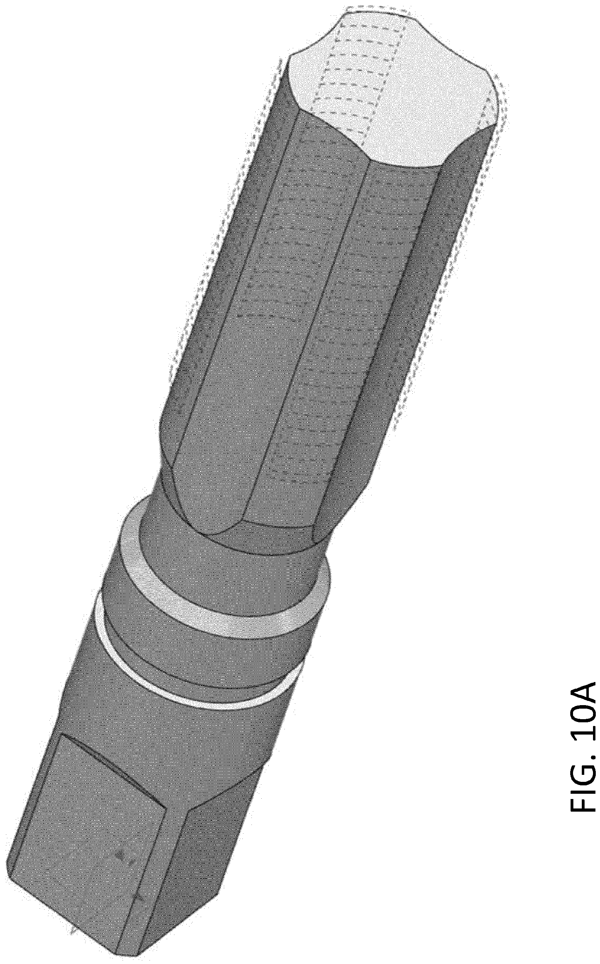

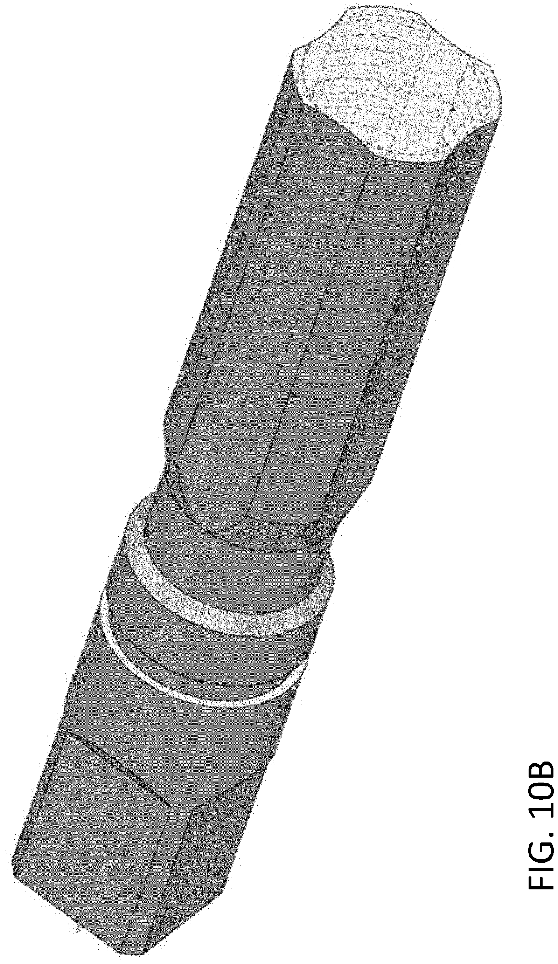

FIGS. 10A and 10B show examples of trimmed curves of a cosmetic thread applied to a shaft in an add material scenario (FIG. 10A) and in a cut material scenario (FIG. 10B).

In FIG. 10A, which is the add material scenario, the trimmed curves of the cosmetic thread applied to the shaft are outside the solid geometry of the modelled object (i.e., the shaft).

In FIG. 10B, which is the cut material scenario, the trimmed curves of the cosmetic thread applied to the shaft are inside the solid geometry of the modelled object (i.e., the shaft).

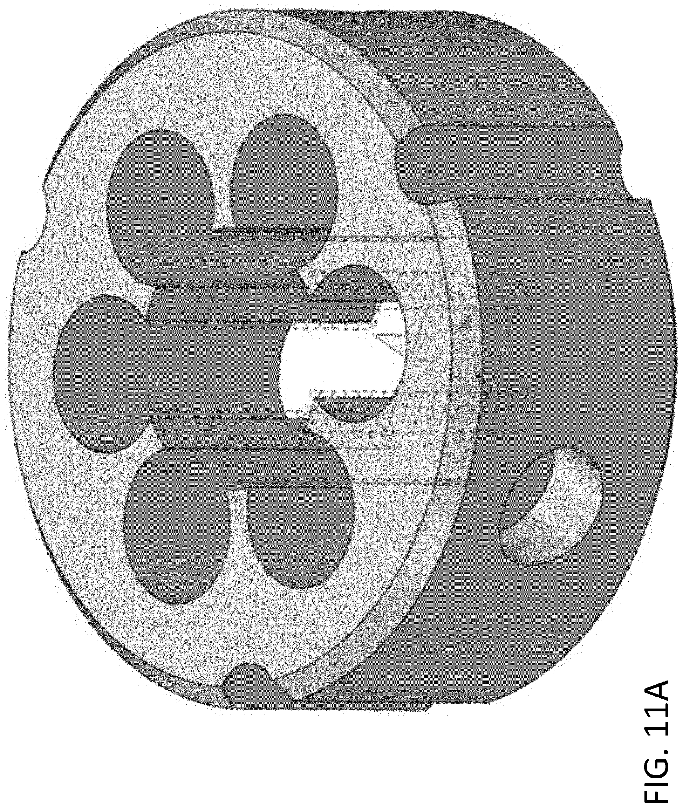

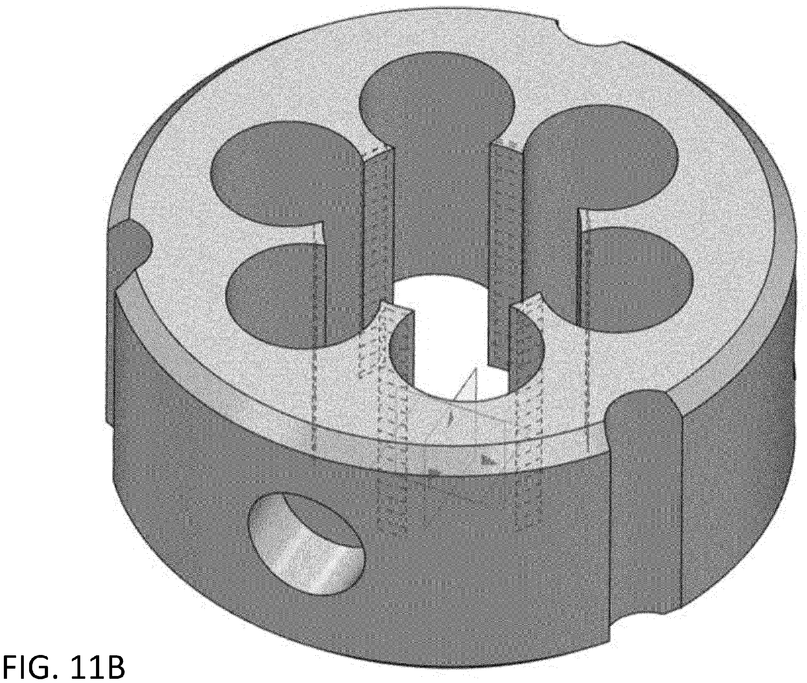

FIGS. 11A and 11B show examples of trimmed curves of a cosmetic thread applied to a hole / circular cut feature in an add material scenario (FIG. 11A) and in a cut material scenario (FIG. 11B).

In FIG. 11A, which is the add material scenario, the trimmed curves of the cosmetic thread applied to the hole / circular cut feature are outside the solid geometry of the modelled object (i.e., the die).

In FIG. 11B, which is the cut material scenario, the trimmed curves of the cosmetic thread applied to the hole / circular cut feature are inside the solid geometry of the modelled object (i.e., the die).

A number of embodiments of the invention have been described. Nevertheless, it will be understood that various modifications may be made without departing from the spirit and scope of the invention.

For example, certain implementations of the cosmetic thread functionalities, such as those disclosed explicitly herein, work on cylindrical holes and shafts. However, these techniques can be expanded to include other geometries such as conical holes/shafts for things like hydraulic fittings. Theoretically, the system and functionalities disclosed herein may be able to create threads (cosmetic and physical) on any shape using various modeling techniques.

Moreover, the systems and techniques disclosed herein (including those related to the creation and display of cosmetic threads, alone or as an alternative to non-cosmetic threads) are not limited to creation or display of actual threads (in a virtual environment), but may be used to represent other physical components, such as an Archimedes' screw or a ramp in a vibratory bowl feeder, etc. (in a virtual environment). Moreover, the threads or similar structures can be created on non-circular/cylindrical geometries. Indeed, threads (including thread-like features) can be created on virtually any shape, as tapered threads, threads on a square body, self-locking nuts, triangular screws, etc. Additionally, threads can be created in a non-continuous helix. A case like this is the threads on the opening of a plastic soda bottle, for example.

The phrase computer-aided design or computer-aided design environment should be construed broadly to include or involve any computer-based systems or techniques for designing, engineering, simulating, or viewing designs with one or more computers or computer-based components.

In various implementations, certain computer components disclosed herein (e.g., applications, design tools, etc.) can be implemented by one or more computer-based processors (referred to herein as processor) executing computer-readable instructions stored on non-transitory computer-readable medium to perform the associated computer-based functionalities. The one or more computer-based processors can be virtually any kind of computer-based processors and can be contained in one housing or distributed at different locations, and the non-transitory computer-readable medium can be or include any one or more of a variety of different computer-based hardware memory / storage devices either contained in one housing or distributed at different locations.

Certain functionalities are described herein as being accessible or activated by a user selecting an onscreen button or the like. This should be construed broadly to include any kind of visible, user-selectable element or other user interactive element.

The systems and techniques disclosed herein are not limited to product design using CAD software specifically in mechanical design. Another area where these systems and techniques might be useful is video game design by generating representative curves (or skeletons) of objects that can then be used to build geometry on top of. The intersection of the curves with existing and downstream geometry and the ability to update those curves after all other geometry has been created could be beneficial to determining and updating geometry based on collision detection in a gaming environment, as an example.

The systems and techniques disclosed herein can be implemented in a number of different ways. In one exemplary implementation, the systems and techniques disclosed herein may be incorporated into the xDesign^{™} computer program available from Dassault Systèmes, the applicant of the current application. In various implementations, the systems and techniques can be deployed otherwise.

It should be understood that the example embodiments described herein may be implemented in many different ways. In some instances, the various methods and machines described herein may each be implemented by a physical, virtual, or hybrid general purpose computer, such as a computer system, or a computer network environment, such as those described herein. The computer / system may be transformed into the machines that execute the methods described herein, for example, by loading software instructions into either memory or non-volatile storage for execution by the CPU. One of ordinary skill in the art should understand that the computer / system and its various components may be configured to carry out any embodiments or combination of embodiments of the present invention described herein. Further, the system may implement the various embodiments described herein utilizing any combination of hardware, software, and firmware modules operatively coupled, internally, or externally, to or incorporated into the computer / system.

Various aspects of the subject matter disclosed herein can be implemented in digital electronic circuitry, or in computer-based software, firmware, or hardware, including the structures disclosed in this specification and/or their structural equivalents, and/or in combinations thereof. In some embodiments, the subject matter disclosed herein can be implemented in one or more computer programs, that is, one or more modules of computer program instructions, encoded on computer storage medium for execution by, or to control the operation of, one or more data processing apparatuses (e.g., processors). Alternatively, or additionally, the program instructions can be encoded on an artificially generated propagated signal, for example, a machine-generated electrical, optical, or electromagnetic signal that is generated to encode information for transmission to suitable receiver apparatus for execution by a data processing apparatus. A computer storage medium can be, or can be included within, a computer-readable storage device, a computer-readable storage substrate, a random or serial access memory array or device, or a combination thereof. While a computer storage medium should not be considered to be solely a propagated signal, a computer storage medium may be a source or destination of computer program instructions encoded in an artificially generated propagated signal. The computer storage medium can also be, or be included in, one or more separate physical components or media, for example, multiple CDs, computer disks, and/or other storage devices.

Certain operations described in this specification (e.g., aspects of those represented in FIGS. 6 and 7A through 7C, and otherwise disclosed herein) can be implemented as operations performed by a data processing apparatus (e.g., a processor / specially programmed processor / computer) on data stored on one or more computer-readable storage devices or received from other sources, such as the computer system and/or network environment described herein. The term "processor" (or the like) encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, for example, code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing, and grid computing infrastructures.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations may be described herein as occurring in a particular order or manner, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

The systems and techniques disclosed herein may be utilized in connection with producing, reviewing, analyzing, and otherwise considering a design of a real-world object that includes, e.g., a physical structure having a threaded feature. Typically, the processes disclosed herein may be utilized to produce marketing materials and the like to sell, discuss, attract investments on, etc. product development and/or commercialization efforts. The design and review process, once completed using one or more techniques disclosed herein, may be followed by manufacturing a real-world version of the designed object (that includes, e.g., the threaded feature) based on the final design that may have been developed using one or more of the techniques disclosed herein. The final, manufactured real world version of the designed object would be a real-world physical thing (e.g., a machined part or component that includes real-world threads).

The systems and techniques disclosed herein also enable a computer or computer system to quickly and efficiently (from a resource utilization perspective) produce different types of visual representations of a particular feature (e.g., a thread on an object) in a virtual environment, where each of the different types of visual representations is better suited than the other for a particular type of task - e.g., understanding that the thread exists vs. seeing and being able to access precise design details associated with the thread in the visual representation. The systems and techniques also enable the computer or computer system to quickly switch between such alternative views on one a single interface that enables the user to choose to display, for example, a cosmetic thread or a physical thread, based on a single feature in the model's history rather than two discreet features that would need to be manually suppressed or unsuppressed to toggle between them.

Other implementations are within the scope of the claims.

## Claims

1. A computer-based method of creating a visual representation of a threaded feature on a three-dimensional (3D) modelled object in a computer-aided design environment, the method comprising:
constructing a helical curve and start and end circles for a threaded feature in a 3D modelled object;
trimming the helical curve to conform to a geometry of the modelled object; and
identifying a boundary of the trimmed helical curve; and
displaying a cosmetic thread to visually represent the threaded feature based on the trimmed helical curve and the identified boundaries of the trimmed helical curve.

2. The computer-based method of claim 1, wherein identifying the boundary of the trimmed helical curve comprises:
intersecting a cylindrical envelope of the helical curve with a neighboring face of a surface of the threaded feature.

3. The computer-based method of claim 2, wherein identifying the boundary of the trimmed helical curve further comprises:
designating an intersection between the cylindrical envelope and the neighboring face of the surface of the threaded feature as the boundary of the trimmed helical curve.

4. The computer-based method of claim 1, further comprising, prior to constructing the helical curve and the start and end circles for the threaded feature:
establishing a thread definition for the threaded feature; and
processing data from the thread definition to support creating the visual representation of the threaded feature.

5. The computer-based method of claim 4, wherein establishing the thread definition comprises:
receiving data from a computer-based user interface identifying a material type, a geometry type, a length option, and a direction type for the threaded feature; and
receiving data from the computer-based user interface identifying a start edge on the modelled object for the threaded feature.

6. The computer-based method of claim 5, wherein the material type specifies whether the thread is to be formed by cutting material or adding material, the geometry type specifies whether the thread is to be a cosmetic thread or a physical thread, the length option specifies whether the length of the thread is to be blind or limited by a certain geometry, and the direction type specifies whether the thread is to left-handed or right-handed, the method , preferably further comprising:
calculating a length of the thread if the thread definition indicates that the length of the thread is limited by certain geometry.

7. The computer-based method of claim 6, further comprising:
enlarging a geometry of the modelled object by thickening to produce an enlarged geometry of the modelled object if the thread definition indicates that the thread is to be formed by adding material, wherein trimming the helical curve to conform to the geometry of the modelled object preferably comprises:
trimming the helical curve to conform to the enlarged geometry of the modelled object if the thread definition indicates that the thread is to be formed by adding material.

8. The computer-based method of claim 1, further comprising:
retrieving values of thread pitch and thread major diameter from data stored in computer-based memory; and
calculating thread height and minor diameter based on the thread pitch and thread major diameter.

9. A computer-based method of creating a visual representation of a threaded feature on a three-dimensional (3D) modelled object in a computer-aided design environment, the method comprising:
establishing a thread definition for the threaded feature;
processing data from the thread definition to support creating the visual representation of the threaded feature; and
constructing thread geometry based on the thread definition and the processing of data from the thread definition, wherein constructing the thread geometry comprises:
determining, with a computer processor, whether the thread definition identifies the visual representation as a cosmetic thread or a physical thread, and if the computer processor determines that the visual representation is a cosmetic thread then:
constructing a helical curve and start and end circles for the threaded feature;
trimming the helical curve to conform to a geometry of the modelled object;
identifying a boundary of the trimmed helical curve; and
displaying, on a computer display, the cosmetic thread to visually represent the threaded feature based on the trimmed helical curve and the identified boundaries of the trimmed helical curve.

10. The computer-based method of claim 9, wherein if the computer processor determines that the visual representation is a physical thread then:
constructing a thread profile;
constructing a sweeping spine containing a helical curve and start and end curves;
sweeping the thread profile along the spine to create a thread tool body; and
modifying a geometry of a portion of the modelled object based on the thread tool body; and
merging the modified geometry with a previous geometry of the modelled object via a union operation;
wherein processing the data from the thread definition to support creating the visual representation of the threaded feature preferably comprises:
determining a diameter of the threaded feature, a thread starting location, and thread direction;
identifying an applicable standard or receiving user input to define one or more thread parameters including thread pitch and thread major diameter;
calculating a thread height and thread minor diameter based on the one or more thread parameters; and
calculating a thread length if the thread definition indicates that the thread length is limited by certain geometry;
the method preferably further comprising;
providing a single interface from which the user can choose to display a cosmetic thread or a physical thread resulting in a single feature in the model's history rather than two discreet features that need to be manually suppressed or unsuppressed.

11. The computer-based method of claim 9, further comprising:
storing a common data holding definition that is applicable whether the visual representation is a cosmetic thread or a physical thread.

12. The computer-based method of claim 11, wherein the common data holding definition stores data from the thread definition for the threaded feature, and results from the processing of the data from the thread definition for the threaded feature;
the method preferably further comprising:
presenting, on the computer display, with an image of the modelled object having the cosmetic thread or with an image of the modelled object having the physical thread, an interactive element, that, when interacted with, causes the computer to switch images.

13. A computer-based system for creating a visual representation of a threaded feature on a three-dimensional (3D) modelled object in a computer-aided design environment, the computer-based system comprising:
a computer processor; and
a memory operatively coupled to the computer processor, wherein the memory stores computer-readable instructions that, when executed by the computer processor, cause the computer-based system to perform the method of any of claims 1 to 8 and/or the method of any of claims 9 to 12.

14. A computer program comprising instructions which, when the program is executed by a computer, cause the computer to carry out the computer-based method of any of claims 1 to 8 and/or the method of any of claims 9 to 12.

15. A non-transitory computer readable medium having stored thereon computer-readable instructions that, when executed by a computer-based processor, cause the computer-based processor to perform the method of any of claims 1 to 8 and/or the method of any of claim 9 to 12.
